# EUROPÄISCHE PATENTSCHRIFT

(11) **EP 3 956 250 B1**
(45) Veröffentlichungstag und Bekanntmachung des Hinweises auf die Patenterteilung: **12.07.2023**
(21) Anmeldenummer: 20728380.5
(22) Anmeldetag: 16.04.2020
(51) Int. Cl.: B65G 43/02

(54) **LAGER- UND KOMMISSIONIERSYSTEM UND VERFAHREN ZUR VERBESSERTEN MESSWERTERFASSUNG IM LAGER- UND KOMMISIONIERSYSTEM**
STORAGE AND PICKING SYSTEM AND METHOD FOR IMPROVED DETECTION OF MEASURED VALUES IN THE STORAGE AND PICKING SYSTEM
SYSTÈME D'ENTREPOSAGE ET DE PRÉPARATION DE COMMANDES ET PROCÉDÉ D'ACQUISITION AMÉLIORÉE DE VALEURS MESURÉES DANS UN SYSTÈME D'ENTREPOSAGE ET DE PRÉPARATION DE COMMANDES

(30) Priorität: 16.04.2019 AT 503452019
(43) Veröffentlichungstag der Anmeldung: 23.02.2022
(73) Patentinhaber: TGW Logistics Group GmbH, 4614 Marchtrenk (AT)
(72) Erfinder: GAGGL, Markus, 4052 Ansfelden (AT); MAHRINGER, Thomas, 4055 Pucking (AT); SCHRÖPF, Harald, 4600 Wels (AT)
(74) Vertreter: Burger, Hannes
(86) Internationale Anmeldenummer: PCT/AT2020/060154
(87) Internationale Veröffentlichungsnummer: WO 2020/210852

(56) Entgegenhaltungen:
- WO-A1-2008/067972
- WO-A1-2016/131005
- WO-A1-2017/100170
- WO-A1-2019/043446
- US-A1- 2006 238 332
- US-A1- 2010 013 654
- US-A1- 2012 027 544

## Beschreibung

Die Erfindung betrifft ein Lager- und Kommissioniersystem, welches einen Lagerbereich, einen Arbeitsplatz zum Kommissionieren und/oder Umpacken von Waren, eine Fördertechnik sowie eine mobile Messwert-Erfassungseinheit umfasst. Der Lagerbereich weist eine Vielzahl an Lagerplätzen auf, welche eine Lagerfläche zum Lagern von Waren ausbilden. Die Fördertechnik umfasst motorisch angetriebene Fördervorrichtungen, welche eine bewegte Transportfläche aufweisen oder bilden und welche zum Transportieren der Waren innerhalb des Lager- und Kommissioniersystems auf dieser Transportfläche ausgebildet sind. Die mobile Messwert-Erfassungseinheit umfasst eine autarke Energieversorgung, eine mit der autarken Energieversorgung verbundene zentrale Recheneinheit und mehrere an die zentrale Recheneinheit angeschlossene Sensoren. Die mobile Messwert-Erfassungseinheit ist zum Erfassen eines Messwerts, eines zeitlichen Verlaufs eines Messwerts und/oder einer örtlichen Verteilung von Messwerten eines physikalischen Parameters auf einer Bewegungsbahn (Trajektorie) der mobilen Messwert-Erfassungseinheit im Lager- und Kommissioniersystem mit Hilfe der Sensoren ausgebildet. Die mobile Messwert-Erfassungseinheit ist weiterhin zum Speichern eines Orts im Lager- und Kommissioniersystem, an dem der Messwert, dessen zeitlicher Verlauf und/oder dessen örtliche Verteilung erfasst wurde, ausgebildet. Die mobile Messwert-Erfassungseinheit kann auf einer Transportfläche der Fördervorrichtungen transportiert und auf einer Lagerfläche der Lagerplätze abgestellt werden.

Schließlich betrifft die Erfindung ein Verfahren zur Messwerterfassung in einem Lager- und Kommissioniersystem der oben genannten Art, bei dem die mobile Messwert-Erfassungseinheit entlang einer Bewegungsbahn im Lager- und Kommissioniersystem bewegt wird und ein Messwert, ein zeitlicher Verlauf eines Messwerts und/oder eine örtliche Verteilung von Messwerten eines physikalischen Parameters auf einer Bewegungsbahn zu einem ersten Zeitpunkt mit Hilfe der Sensoren erfasst wird und ein Ort im Lager- und Kommissioniersystem, an dem der Messwert, dessen zeitlicher Verlauf und/oder dessen örtliche Verteilung erfasst wurde, gespeichert wird.

Traditionell werden Messdaten in einem Lager- und Kommissioniersystem bekannter Art mithilfe von fix installierten beziehungsweise ortsfesten Sensoren erfasst, sowie mit Hilfe von Sensoren, die auf fahrbaren Geräten des Lager- und Kommissioniersystems installiert sind (zum Beispiel auf oder in Regalbediengeräten und autonomen Flurförderfahrzeugen). Auch die manuelle Messwerterfassung mithilfe von tragbaren Geräten in einem Lager- und Kommissioniersystem ist grundsätzlich bekannt.

Problematisch ist, dass die Anzahl an ortsfesten beziehungsweise auf oder in fahrbaren Geräten installierten Sensoren alleine schon aus wirtschaftlichen Gründen begrenzt ist und eine umfassende Erhebung von Messdaten daher grundsätzlich nicht oder nur schwer möglich ist. Auch die manuelle Messwerterfassung mithilfe von tragbaren Geräten ist nur begrenzt möglich, da nicht alle Orte eines Lager- und Kommissioniersystems für Personen leicht zugänglich sind, beziehungsweise ein Zugang häufig mit einer zumindest teilweisen Stilllegung des Lager- und Kommissioniersystems verbunden ist. Auch aus diesem Grund ist eine umfassende Erhebung von Messdaten grundsätzlich nicht oder nur schwer möglich.

Die WO 2008/067972 A1, US 2010/0013654 A1, US 2006/0238332 A1 und US 2012/027544 A1 offenbaren eine Messwert-Erfassungseinheit umfassend eine autarke Energieversorgung, eine mit der autarken Energieversorgung verbundene zentrale Recheneinheit und mehrere an die zentrale Recheneinheit angeschlossene Sensoren.

Nach der WO 2008/067972 A1, die den Oberbegriff des Anspruchs 1 sowie des Anspruchs 7 zeigt, ist die Messwert-Erfassungseinheit durch eine mobile Messwert-Erfassungseinheit gebildet, die durch GSM, GPS oder Peilsender geortet werden kann. Die mobile Messwert-Erfassungseinheit ist ausgebildet
- zum Erfassen eines Messwerts, eines zeitlichen Verlaufs eines Messwerts und/oder einer örtlichen Verteilung von Messwerten eines physikalischen Parameters mit Hilfe der Sensoren,
- zum Speichern eines Orts im Lager- und Kommissioniersystem, an dem der Messwert, dessen zeitlicher Verlauf und/oder dessen örtliche Verteilung erfasst wurde, und
- für einen Transport auf einer Transportfläche und/oder für einen Zwischenhalt auf einer Lagerfläche.

Die WO 2017/100170 A1 offenbart ein mobiles Ladehilfsmittel zum Transport von Waren. Eine Aufgabe der vorliegenden Erfindung ist es, ein verbessertes Lager- und Kommissioniersystem und ein verbessertes Verfahren zur Messwerterfassung in einem Lager- und Kommissioniersystem anzugeben. Insbesondere sollen die Möglichkeiten zur Erhebung von Messdaten bei verhältnismäßig geringem technischen und finanziellen Einsatz deutlich vergrößert werden.

Die Aufgabe der Erfindung wird durch das Lager- und Kommissioniersystem und das Verfahren zur Messwerterfassung gemäß der Ansprüche 1 und 7 gelöst.

Somit können die im Lager- und Kommissioniersystem in verschiedenen Förderabschnitten und Lagerbereichen herrschenden Umgebungsbedingungen in umfassender Weise erfasst werden. Vorteilhaft kann die mobile Messwert-Erfassungseinheit alle Orte im Lager- und Kommissioniersystem erreichen, welche auch für den Transport oder die Lagerung von Waren vorgesehen sind. Naturgemäß können von der mobilen Messwert-Erfassungseinheit damit praktisch alle relevanten Orte im Lager- und Kommissioniersystem erreicht werden. Die in der mobilen Messwert-Erfassungseinheit vorgesehenen Einrichtungen, das heißt insbesondere die zentrale Recheneinheit und die Sensoren der mobilen Messwert-Erfassungseinheit, können daher in vielfältiger Weise eingesetzt werden. Da diese für das gesamte Lager- und Kommissioniersystem im Grunde nur einmal benötigt werden, können qualitativ hochwertige Sensoren eingesetzt werden, ohne die Kosten für das Lager- und Kommissioniersystem maßgeblich zu beeinflussen. Darüber hinaus kann bei der mobilen Messwert-Erfassungseinheit auf einen eigenen Antrieb verzichtet werden, da eine Bewegung beziehungsweise ein Transport derselben mithilfe der Fördervorrichtungen des Lager- und Kommissioniersystems möglich ist. Das heißt, die mobile Messwert-Erfassungseinheit muss selbst keinen motorischen Antrieb zu deren Bewegung aufweisen. Im Endergebnis kann der örtliche und inhaltliche Umfang der möglichen Messungen in einem Lager- und Kommissioniersystem sowie die Qualität der Messergebnisse bei nur geringem Kosteneinsatz maßgeblich gesteigert werden. Mit anderen Worten ist die umfassende Erhebung von Messdaten im wirtschaftlichen Rahmen möglich.

Generell kann das Lager- und Kommissioniersystem eine oder mehrere (unabhängig voneinander bewegbare) mobile Messwert-Erfassungseinheiten umfassen.

Die Bewegungsbahn (Trajektorie), entlang welcher die mobile Messwert-Erfassungseinheit durch das Lager- und Kommissioniersystem bewegt wird, kann beispielsweise von einem übergeordneten zentralen Steuersystem (zum Beispiel von einem Materialflussrechner oder einem Warehouse Management System) des Lager- und Kommissioniersystems vorgegeben werden. In diesem Fall werden von dem übergeordneten zentralen Steuersystem (welches vom Lager- und Kommissioniersystem umfasst ist) also nicht nur die Bewegungen der Waren (welche mit oder ohne Ladehilfsmittel transportiert und gelagert werden können) koordiniert, sondern es wird von dem übergeordneten zentralen Steuersystem auch die Bewegungsbahn der mobilen Messwert-Erfassungseinheit vorgegeben. Alternativ kann die Bewegungsbahn auch von der mobilen Messwert-Erfassungseinheit selbst oder einer Fernsteuerung für die mobile Messwert-Erfassungseinheit vorgegeben werden. Die Bewegungsbahn kann beispielsweise nach dem Zufallsprinzip vorgegeben werden. Auch andere Strategien zur Vorgabe einer Bewegungsbahn sind natürlich möglich. Die Bewegungsbahn kann alternativ auch von einer Bedienperson vorgegeben werden.

Ein Messwert, ein zeitlicher Verlauf eines Messwerts und/oder eine örtliche Verteilung von Messwerten eines physikalischen Parameters können im Rahmen dieser Offenbarung auch unter dem allgemeinen Begriff "Messdaten" zusammengefasst und synonymisch gebraucht werden. An dieser Stelle wird auch angemerkt, dass ein physikalischer Parameter auch das Differential eines anderen physikalischen Parameters sein kann. Dementsprechend, können "Messdaten" auch durch Berechnung von anderen Messdaten erhalten werden.

Messdaten können in Echtzeit an ein Empfangsgerät einer Bedienperson übermittelt werden, oder sie werden zwischengespeichert und zu einem späteren Zeitpunkt an das Empfangsgerät übermittelt. Die Übertragung kann über eine drahtlose oder drahtgebundene Datenschnittstelle, insbesondere über eine Funkschnittstelle oder eine Drahtschnittstelle erfolgen. Letztere kann insbesondere an einer Ladestation für die autarke Energieversorgung der Messwert-Erfassungseinheit vorgesehen sein, welche in periodischen Abständen angefahren wird.

Die Erfassung von Messdaten durch die mobile Messwert-Erfassungseinheit kann während der Transportbewegung oder im Stillstand erfolgen. Beispielsweise kann die mobile Messwert-Erfassungseinheit auf einem Lagerplatz des Lagerbereichs, auch über einen längeren Zeitraum, Messdaten erfassen. Beispielsweise können auf diese Weise Vibrationen in einem Lagerregal erfasst werden.

Die zentrale Recheneinheit kann insbesondere einen Mikrocontroller, einen Industrie-PC (insbesondere in Verbindung mit einer Datenbank) oder eine Speicherprogrammierbare Steuerung, kurz "SPS", umfassen oder durch diese gebildet sein.

An dieser Stelle wird auch angemerkt, dass in einem Lager- und Kommissioniersystem (gleichzeitig) Messdaten von mobilen Messwert-Erfassungseinheiten unterschiedlicher Bauart erfasst werden können. Beispielsweise können einfach aufgebaute Messwert-Erfassungseinheiten für eng umgrenzte Messaufgaben vorgesehen sein, beispielsweise für die Messung nur eines einzigen oder nur einiger weniger Messparameter, etwa während einem Langzeiteinsatz in einem Lagerregal. Andererseits können universell einsetzbare und mit sehr vielen unterschiedlichen Sensoren ausgestattete mobile Messwert-Erfassungseinheiten vorgesehen sein.

Die Fördertechnik kann ortsfest angeordnete und motorisch angetriebene Fördervorrichtungen und/oder mobile (ortsungebundene) und motorisch angetriebene Fördervorrichtungen zum Transport von Waren und der mobilen Messwert-Erfassungseinheit umfassen. Die Fördertechnik kann insbesondere in "ortsfeste Fördertechnik" (insbesondere umfassend "Liegeförderbahnen" und/oder "Hängeförderbahnen") und "automatisiert betriebene Förderfahrzeuge" unterteilt werden.

Die Fördertechnik verbindet insbesondere den Lagerbereich und den zumindest einen Arbeitsplatz zum Kommissionieren und/oder Umpacken von Waren und bildet im Speziellen ein Transportnetz von Transportwegen innerhalb des Lager- und Kommissioniersystems. Das Transportnetz wird durch die Summe der Transportflächen gebildet. Grundsätzlich ist es dabei auch möglich, dass das Transportnetz durch eine einzige Transportfläche gebildet wird. Eine Bewegungsbahn verläuft stets auf einer Transportfläche beziehungsweise entlang der Transportwege im Transportnetz. Eine Bewegungsbahn kann auch einen Lagerplatz beziehungsweise eine Lagerfläche inkludieren. Transportwege sind nicht notgedrungen starr angeordnet, sondern können bei Einsatz mobiler Fördertechnik auch bei Bedarf flexibel gebildet oder verändert werden.

Der Transport und die Lagerung der Waren innerhalb des Lager- und Kommissioniersystems kann mit Ladehilfsmitteln oder ohne Ladehilfsmittel erfolgen. Ein Ladehilfsmittel kann beispielsweise als Behälter, Karton, Tablar, Palette, Hängetasche und dergleichen ausgebildet sein.

Auf einer "Liegeförderbahn" werden Waren (mit oder ohne Ladehilfsmittel) und die mobile Messwert-Erfassungseinheit stehend oder liegend transportiert.

Auf einer "Hängeförderbahn" werden Waren (mit oder ohne Ladehilfsmittel, das heißt mit einer Hängetasche oder direkt auf Kleiderbügel) und die mobile Messwert-Erfassungseinheit dagegen hängend transportiert.

Die ortsfest angeordneten, motorisch angetriebenen Fördervorrichtungen benötigen zum Warentransport fix verbaute Einrichtungen und können Förderrollen, Förderbänder, Regalbediengeräte, Hängebahnen mit einem Antriebssystem, Lifte und/oder Paternoster umfassen, und die mobilen, motorisch angetriebenen Fördervorrichtungen können autonome Flurförderfahrzeuge umfassen.

Ein "autonomes Flurförderfahrzeug" ("Autonomous Guided Vehicle", kurz "AGV" oder "Autonomous Mobile Robot", kurz "AMR") ist ein schienenungebundenes, automatisiert betriebenes (fahrerloses) Förderfahrzeug zum Transport von Waren und der mobilen Messwert-Erfassungseinheit, welches entlang fix vorgegebener Bahnen fährt oder welches frei geführt ist, also ohne fixer Spurführung. Eine fixe Spurführung kann am Boden der Fahrfläche vorgegeben sein, etwa mit Hilfe von optischen Farbstreifen, mit magnetischen Streifen oder mit Markierungs-Tags. An einem Fahrgestell des Flurförderfahrzeug sind Räder angeordnet, von denen wenigstens eines angetrieben ist. Wenigstens eines der Räder ist lenkbar, sofern das autonome Förderfahrzeug nicht über Räder verfügt, mit denen auch eine Seitwärtsbewegung ausgeführt werden kann (z.B. Mecanum-Räder). Ein autonomes Flurförderfahrzeug umfasst auch Sensoren zum Erfassen der Umgebung des Flurförderfahrzeugs und zur Orientierung im Raum. Weiterhin umfasst ein autonomes Flurförderfahrzeug auch eine elektronische Steuerung zum Empfang von Befehlen von einer übergeordneten (zentralen) Steuerung und zum Steuern/Regeln der Bewegungen des autonomes Flurförderfahrzeugs. Ein autonomes Flurförderfahrzeug weist insbesondere eine Transportplattform auf, auf der eine zu transportierenden Ware oder eine liegend/stehend zu transportierende mobile Messwert-Erfassungseinheit temporär aufgenommen werden kann. Anstelle der Transportplattform oder zusätzlich dazu kann das automatisiert betriebene Förderfahrzeug auch eine (teleskopierbare) Hängestange beziehungsweise Hängebahn zur Aufnahme von Hängetaschen oder einer hängend zu transportierenden mobilen Messwert-Erfassungseinheit aufweisen. Beispielsweise kann die Transportplattform/Hängestange fix am Förderfahrzeug befestigt sein, die Transportplattform/Hängestange kann aber auch vertikal und/oder seitlich relativ zu einem Fahrgestell des Förderfahrzeugs beweglich sein, um beispielsweise eine Ware oder eine mobile Messwert-Erfassungseinheit in ein Lagerregal einlagern und aus dem Lagerregal auslagern zu können.

Ein "Regalbediengerät" ist ein automatisiert betriebenes Förderfahrzeug, das ähnliche Merkmale aufweist wie ein autonomes Flurförderfahrzeug, jedoch auf Schienen fährt. Ein Regalbediengerät kann als Einebenen-Regalbediengerät (auch "Shuttle" genannt) oder als Mehrebenen-Regalbediengerät ausgeführt sein. Solche Regalbediengeräte werden entlang von Fahrschienen bewegt und sind deshalb schienengebunden. Aus diesem Grund werden Regalbediengeräte der ortsfesten Fördertechnik zugerechnet.

Ein "Arbeitsplatz zum Kommissionieren und/oder Umpacken von Waren" ist ein Bereich oder Platz, an dem Waren aus einem oder in ein Ladehilfsmittel geladen werden können. Insbesondere dient das Kommissionieren dem Zusammenstellen von Waren, die zu einem Kundenauftrag gehören. Das Umpacken von Waren betrifft beispielsweise das Umpacken von einer Wareneingangseinheit in ein Ladehilfsmittel anhand eines Auftrags, welcher nicht dem Kundenauftrag entspricht.

Eine "Transportfläche" zur Aufnahme und zum Transport einer Ware beziehungsweise der mobilen Messwert-Erfassungseinheit kann unterschiedliche Formen aufweisen. Beispielsweise wird eine Transportfläche im Fall von Förderrollen durch eine (virtuelle) Ebene gebildet, welche die Förderrollen auf deren Oberseite tangential berührt. Ähnliches gilt für ein Förderband, bei dem die Transportfläche durch das Obertrum des Förderbands gebildet ist. Ein Lift oder ein Paternoster umfasst eine vertikal verfahrbare Plattform, welche auf ihrer Oberseite eine Transportfläche ausbildet. Ebenso umfasst ein Regalbediengerät (Einebenenregalbediengerät oder Mehrebenenregalbediengerät) eine Plattform, welche auf einem Fahrgestell angeordnet ist und auf ihrer Oberseite eine Transportfläche ausbildet. Das Fahrgestell selbst, weist schienengeführte Räder zu dessen Bewegung auf. Ein autonomes Flurförderfahrzeug umfasst ebenfalls eine Plattform, welche auf einem Fahrgestell angeordnet ist und auf ihrer Oberseite eine Transportfläche ausbildet. Das Fahrgestell selbst, weist wiederum Räder zu dessen Bewegung auf. Die oben genannten Plattformen werden als Ganzes gegenüber einem Fußboden des Lager- und Kommissioniersystems bewegt und sind insbesondere als starre Körper ausgebildet. Ein Förderband ist dagegen kein starrer Körper und es findet - bezogen auf das gesamte Förderband - keine Relativbewegung gegenüber dem Fußboden des Lager- und Kommissioniersystems statt. Stattdessen befindet sich die für eine Bewegung einer Ware oder der mobilen Messwert-Erfassungseinheit relevante Transportfläche (nur) auf dem Obertrum des Förderbands.

Die Sensoren der mobilen Messwert-Erfassungseinheit können ein Mikrofon, einen Vibrationssensor oder einen Beschleunigungssensor (z.B. auf Basis einer Piezo-Technologie), einen Temperatursensor, eine Infrarotkamera, eine Kamera für den sichtbaren Wellenlängenbereich, einen Neigungssensor, einen RFID-Transponder (zur Positionsbestimmung), Sensoren für die Triangulation, Entfernungsmessung oder Laufzeitmessung (z.B. für die Positionsbestimmung mittels Indoor-GPS, Bluetooth oder WLAN) und/oder einen Gassensor umfassen. Für die Positionsbestimmung kann die mobile Messwert-Erfassungseinheit darüber hinaus einen Barcode aufweisen, wenn die Positionsbestimmung mit Hilfe eines Barcode-Lesegeräts erfolgt.

Möglich ist weiterhin, dass
- als physikalischer Parameter ein Schalldruck vorgesehen ist und von einem Sensor ein Lautstärke-Messwert oder eine Audioaufnahme (und somit ein zeitlicher Verlauf des Schalldrucks) erfasst wird,
- als physikalischer Parameter eine Amplitude oder eine Frequenz einer mechanischen Vibration vorgesehen ist und von einem Sensor ein Messwert für die Amplitude und/oder die Frequenz der Vibration erfasst wird,
- als physikalischer Parameter eine Temperatur vorgesehen ist und von einem Sensor ein Temperatur-Messwert oder ein Infrarotbild (und somit eine örtliche Verteilung der Temperatur) erfasst wird,
- als physikalischer Parameter eine Helligkeit und/oder eine Farbe vorgesehen ist und von einem Sensor ein stillstehendes Bild (örtliche Verteilung von Helligkeit und/oder Farbe) oder eine bewegte Videoaufnahme (zeitlicher Verlauf der örtlichen Verteilung von Helligkeit und/oder Farbe) erfasst wird,
- als physikalischer Parameter eine Konzentration eines Gases (insbesondere von Sauerstoff) vorgesehen ist und von einem Sensor eine Gas-Konzentration erfasst wird und/oder
- als physikalischer Parameter eine Zeitspanne vorgesehen ist und von einer Zeitmesseinrichtung die Zeitspanne ermittelt wird, welche die mobile Messwert-Erfassungseinheit für eine Bewegung von einem ersten Ort an einen zweiten Ort benötigt.

Im weitesten Sinn kann also auch ein Zählbaustein, welcher die Schwingungen eines Schwingkreises erfasst und in eine Zeit umwandelt im Rahmen der Erfindung als "Sensor" aufgefasst werden.

Günstig ist es, wenn die mobile Messwert-Erfassungseinheit einen Transportboden aufweist, mit dessen Hilfe die mobile Messwert-Erfassungseinheit stehend oder liegend auf der Transportfläche der Fördervorrichtungen des Lager- und Kommissioniersystems transportierbar ist. Demzufolge wird die mobile Messwert-Erfassungseinheit stehend oder liegend auf der Transportfläche der Fördervorrichtungen des Lager- und Kommissioniersystems transportiert. Diese Ausführungsform eignet sich vor allem für Lager- und Kommissioniersysteme, in denen Waren und/oder Ladehilfsmittel stehend oder liegend transportiert werden.

Günstig ist es weiterhin, wenn die mobile Messwert-Erfassungseinheit einen Hänge-Transportträger aufweist, mit dessen Hilfe die mobile Messwert-Erfassungseinheit hängend auf der Transportfläche der Fördervorrichtungen des Lager- und Kommissioniersystems transportierbar ist. Demzufolge wird die mobile Messwert-Erfassungseinheit hängend auf der Transportfläche der Fördervorrichtungen des Lager- und Kommissioniersystems transportiert. Diese Ausführungsform eignet sich vor allem für Lager- und Kommissioniersysteme, in denen Waren und/oder Ladehilfsmittel hängend transportiert werden. Insbesondere bilden die Fördervorrichtungen des Lager- und Kommissioniersystems in diesem Fall Hängeförderbahnen. Der Hänge-Transportträger kann zum Beispiel einen Haken und/oder einen Laufwagen umfassen oder durch diesen gebildet sein.

Vorteilhaft ist es weiterhin, wenn die mobile Messwert-Erfassungseinheit abwechselnd stehend/liegend und hängend auf der Transportfläche der Fördervorrichtungen des Lager- und Kommissioniersystems transportiert wird. Diese Ausführungsform eignet sich vor allem für Lager- und Kommissioniersysteme, in denen Waren (mit oder ohne Ladehilfsmittel) sowohl stehend/liegend als auch hängend transportiert werden.

Besonders vorteilhaft ist es, wenn ein äußeres Gehäuse der mobilen Messwert-Erfassungseinheit in Form und/oder Größe einem Ladehilfsmittel entspricht, das dem Warentransport und der Warenlagerung im Lager- und Kommissioniersystem dient. Auf diese Weise kann die mobile Messwert-Erfassungseinheit in exakt derselben Weise im Lager- und Kommissioniersystem transportiert und auf einem Lagerplatz abgestellt oder aufgehängt werden wie ein Ladehilfsmittel. Die mobile Messwert-Erfassungseinheit kann insbesondere als modulares System ausgestaltet sein, das in unterschiedliche Arten von Ladehilfsmittels integrierbar ist. Zum Beispiel können zumindest die autarke Energieversorgung, die zentrale Recheneinheit und die Sensoren der mobilen Messwert-Erfassungseinheit auf einer Basisplatte aufgebaut oder in einem Basisgehäuse eingebaut sein. Die Basisplatte oder das Basisgehäuse können in Folge in ein Ladehilfsmittel eingebaut werden, beispielsweise durch Verspreizen der Basisplatte oder des Basisgehäuses im Ladehilfsmittel oder durch Einkleben, Einschäumen oder Einschrauben der Basisplatte oder des Basisgehäuses in das Ladehilfsmittel. In diesem Fall umfasst das Ladehilfsmittel den Transportboden oder den Hänge-Transportträger der mobilen Messwert-Erfassungseinheit. Die mobile Messwert-Erfassungseinheit kann somit auch ein Ladehilfsmittel (beispielweise einen Behälter oder eine Hängetasche) umfassen und entweder auf der Lagerfläche liegend (Behälter) oder auf der Lagerfläche hängend zwischengepuffert beziehungsweise gelagert werden.

Besonders vorteilhaft ist eine Variante des vorgestellten Verfahrens, bei dem zumindest ein Messwert, zumindest ein zeitlicher Verlauf zumindest eines Messwerts und/oder zumindest eine örtliche Verteilung von Messwerten eines physikalischen Parameters oder mehrerer physikalischer Parameter einer Analyse zur Detektion einer Anomalie, entsprechend einer Abweichung von einem Normalzustand beziehungsweise einer Unregelmäßigkeit, unterzogen werden. Dadurch können bereits bestehende oder sich erst anbahnende Probleme im Lager- und Kommissioniersystem erkannt werden. Dementsprechend ist es auch von Vorteil, wenn das Lager- und Kommissioniersystem eine rechnerunterstützte Auswerteeinheit aufweist, die dazu ausgebildet ist, zumindest einen Messwert, zumindest einen zeitlichen Verlauf zumindest eines Messwerts und/oder zumindest eine örtliche Verteilung von Messwerten eines physikalischen Parameters oder mehrerer physikalischer Parameter einer Analyse zur Detektion einer Anomalie, entsprechend einer Abweichung von einem Normalzustand, zu unterziehen.

Besonders vorteilhaft ist es weiterhin, wenn das vorgestellte Verfahren zur Detektion einer Anomalie in einem Lager- und Kommissioniersystem ausgebildet ist und die folgenden Schritte zusätzlich umfasst:
- Erfassen eines Messwerts, eines zeitlichen Verlaufs eines Messwerts und/oder einer örtlichen Verteilung von Messwerten des zum ersten Zeitpunkt erfassten physikalischen Parameters entlang der Bewegungsbahn mit Hilfe der Sensoren im Wesentlichen am selben Ort zu einem zweiten Zeitpunkt,
- Ermitteln einer Abweichung des zum ersten Zeitpunkt erfassten Messwerts von dem zum zweiten Zeitpunkt erfassten Messwert, des zum ersten Zeitpunkt erfassten zeitlichen Verlaufs des Messwerts von dem zum zweiten Zeitpunkt erfassten zeitlichen Verlauf des Messwerts und/oder der zum ersten Zeitpunkt erfassten örtlichen Verteilung der Messwerte von der zum zweiten Zeitpunkt erfassten örtlichen Verteilung der Messwerte, und Erzeugen und Abgeben einer Abweichungs-Information, wenn die ermittelte Abweichung eine vorgebbare Schwelle überschreitet.

Dementsprechend ist es auch von Vorteil, wenn die rechnerunterstützte Auswerteeinheit
- zum Erfassen eines Messwerts, eines zeitlichen Verlaufs eines Messwerts und/oder einer örtlichen Verteilung von Messwerten dieses physikalischen Parameters entlang der Bewegungsbahn mit Hilfe der Sensoren an einem Ort im Lager- und Kommissioniersystem zu einem ersten Zeitpunkt ausgebildet ist,
- zum Erfassen eines Messwerts, eines zeitlichen Verlaufs eines Messwerts und/oder einer örtlichen Verteilung von Messwerten dieses physikalischen Parameters entlang der Bewegungsbahn mit Hilfe der Sensoren im Wesentlichen am selben Ort zu einem zweiten Zeitpunkt ausgebildet ist,
- zum Ermitteln einer Abweichung des zum ersten Zeitpunkt erfassten Messwerts von dem zum zweiten Zeitpunkt erfassten Messwert, des zum ersten Zeitpunkt erfassten zeitlichen Verlaufs des Messwerts von dem zum zweiten Zeitpunkt erfassten zeitlichen Verlauf des Messwerts und/oder der zum ersten Zeitpunkt erfassten örtlichen Verteilung der Messwerte von der zum zweiten Zeitpunkt erfassten örtlichen Verteilung der Messwerts ausgebildet ist, und
- zum Erzeugen und Abgeben einer Abweichungs-Information ausgebildet ist, wenn die ermittelte Abweichung eine vorgebbare Schwelle überschreitet.

Besonders vorteilhaft ist es weiterhin, wenn zumindest ein Messwert, ein zeitlicher Verlauf zumindest eines Messwerts und/oder zumindest eine örtliche Verteilung von Messwerten eines physikalischen Parameters oder mehrerer physikalischer Parameter einer Analyse zur automatischen Detektion einer Anomalie unter Verwendung einer statistischen Signalauswertung oder unter Verwendung eines lernfähigen Algorithmus unterzogen werden und eine Abweichungs-Information erzeugt und abgegeben wird, wenn eine Anomalie, entsprechend einer Abweichung von einem Normalzustand, erkannt wurde. Dementsprechend ist es von Vorteil, wenn die rechnerunterstützte Auswerteeinheit dazu ausgebildet ist, zumindest einen Messwert, zumindest einen zeitlichen Verlauf zumindest eines Messwerts und/oder zumindest eine örtliche Verteilung von Messwerten eines physikalischen Parameters oder mehrerer physikalischer Parameter einer Analyse zur automatischen Detektion einer Anomalie unter Verwendung einer statistischen Signalauswertung oder unter Verwendung eines lernfähigen Algorithmus zu unterziehen und eine Abweichungs-Information zu erzeugen und abzugeben, wenn eine Anomalie, entsprechend einer Abweichung von einem Normalzustand, erkannt wurde.

Beispielsweise können langsame Veränderungen in einer Zeitreihe von Messwerten ("Messwert-Drifts") auf ein sich anbahnendes Problem im Lager- und Kommissioniersystem hindeuten. Aber auch rasche und starke Änderungen von Messwerten sind häufig Indikatoren für ein (insbesondere bereits bestehendes) Problem im Lager- und Kommissioniersystem. Für die Analyse von Messwertreihen einzelner physikalischer Parameter eignet sich vor allem die statistische Signalauswertung, wohingegen lernfähige Algorithmen (z.B. künstliche neuronale Netze, selbstlernende Entscheidungsbäume, genetische Algorithmen) vor allem für die Analyse von Messwertreihen einer Vielzahl von physikalischen Parametern von Vorteil sind. Die Anwendung von lernfähigen Algorithmen ist auch unter dem Begriff "maschinelles Lernen" bekannt. An dieser Stelle wird angemerkt, dass die genannten Verfahren nicht nur zur Erkennung von negativen Entwicklungen und in Folge von Problemen geeignet ist, sondem grundsätzlich auch positive Entwicklungen erkannt werden können. Diese können ebenfalls dazu beitragen ein Lager- und Kommissioniersystem zu verbessern, in dem diese positiven Effekte bei der Planung und im Betrieb berücksichtigt und verstärkt werden.

Der Begriff "Abweichungs-Information" ist im Rahmen dieser Offenbarung weit zu interpretieren und umfasst insbesondere akustische und/oder optische Signale, sowie Meldungen an verbundene Empfangsgeräte. Unter einer Abweichungs-Information kann somit insbesondere auch eine Email, eine SMS ("Short Message Service") das Setzen eines Flags oder die Abgabe eines Interruptsignals verstanden werden. Inhaltlich kann die Abweichungs-Information die ermittelte Abweichung selbst aufweisen (also zum Beispiel die Differenz zwischen zwei Messwerten) oder auch die bloße Information, dass eine Abweichung vorliegt (im Sinne einer Unterscheidung: Abweichung liegt vor / Abweichung liegt nicht vor). Kann der ermittelten Abweichung ein sich anbahnender oder sogar ein vorliegender Defekt im Lager- und Kommissioniersystem zugeordnet werden, dann kann die Abweichungs-Information auch die Funktion eines Alarms aufweisen beziehungsweise übernehmen.

Weiterhin ist es besonders vorteilhaft, wenn mit dem Abgeben der Abweichungs-Information eine Eingabeaufforderung an einen Benutzer gerichtet wird und eine technische Information des Benutzers betreffend eine Betriebsfähigkeit des Lager- und Kommissioniersystems an einer Eingabevorrichtung erfasst wird und die technische Information der Abweichung zugeordnet und in der Datenbank gespeichert wird oder die technische Information gemeinsam mit der Abweichung in einen Algorithmus eingespeist wird. Dementsprechend ist es von Vorteil, wenn die rechnerunterstützte Auswerteeinheit dazu ausgebildet ist, mit dem Abgeben der Abweichungs-Information eine Eingabeaufforderung an einen Benutzer zu richten und eine technische Information des Benutzers betreffend eine Betriebsfähigkeit des Lager- und Kommissioniersystems an einer Eingabevorrichtung zu erfassen und die technische Information der Abweichung zuzuordnen und in der Datenbank zu speichern oder die technische Information gemeinsam mit der Abweichung in einen Algorithmus einzuspeisen.

Es erfolgt also eine Klassifizierung der genannten Abweichung, wobei die Erfahrung des Anlagebetreibers in die Klassifizierung einfließt. Im Laufe der Zeit kann so eine Wissensbasis angelegt werden, welche hilft, zukünftig auftretende Anomalien rasch und korrekt zu einer technischen Information zuordnen zu können. Insbesondere kann gemeinsam mit der Erfassung der technischen Information auch ein der technischen Information zugeordneter Ort oder Bauteil eingegeben werden, z.B. "Lagerdefekt an der Förderrolle Nummer 7".

Besonders vorteilhaft ist es darüber hinaus, wenn einer Abweichung oder mehreren Abweichungen in einer Datenbank und/oder durch einen Algorithmus eine technische Information betreffend eine Betriebsfähigkeit des Lager- und Kommissioniersystems zugeordnet wird und diese technische Information als Abweichungs-Information oder gemeinsam mit der Abweichungs-Information (über eine Ausgabeeinheit) ausgegeben wird. Es erfolgt also ebenfalls eine Klassifizierung der genannten Abweichung. Mit anderen Worten weist das Lager- und Kommissioniersystem eine Datenbank und/oder einen Algorithmus auf, die oder der zum Ermitteln einer Zuordnung einer technischen Information betreffend eine Betriebsfähigkeit des Lager- und Kommissioniersystems zu einer Abweichung des zum ersten Zeitpunkt erfassten Messwerts von dem zum zweiten Zeitpunkt erfassten Messwert, des zum ersten Zeitpunkt erfassten zeitlichen Verlaufs des Messwerts von dem zum zweiten Zeitpunkt erfassten zeitlichen Verlauf des Messwerts und/oder der zum ersten Zeitpunkt erfassten örtlichen Verteilung der Messwerte von der zum zweiten Zeitpunkt erfassten örtlichen Verteilung der Messwerte ausgebildet ist. Die Ausgabeeinheit kann beispielsweise für die optische und/oder akustische Ausgabe eingerichtet sein.

In der Datenbank wird die oben genannte Zuordnung gespeichert und kann ausgelesen werden, wenn diese benötigt wird. Im Gegensatz dazu erfolgt die oben genannte Zuordnung bei Zuhilfenahme eines Algorithmus durch Berechnung. Der Algorithmus kann ein mathematisches Modell des Lager- und Kommissioniersystems oder ein neuronales Netz umfassen oder aus diesem gebildet sein. Die genannte technische Information betreffend eine Betriebsfähigkeit des Lager- und Kommissioniersystems kann beispielsweise einen Hinweis auf im Normalbereich befindliche Messwerte, einen Hinweis auf Abnutzung/Verschleiß, einen Hinweis auf einen sich anbahnenden technischen Defekt oder einen Hinweis auf einen vorliegenden technischen Defekt umfassen oder durch einen solchen gebildet sein. In dieser Ausführungsform umfasst das vorgestellte Verfahren somit die Funktion eines Expertensystems.

Günstig ist es, wenn
- einer übermäßigen Erwärmung im Bereich eines Wälz- oder Gleitlagers (z.B. im Randbereich einer Förderrolle) ein Lagerdefekt als technische Information zugeordnet wird,
   einem Geräusch, das für einen Lagerdefekt charakteristisch ist, ein Lagerdefekt als technische Information zugeordnet wird,
- einer übermäßigen Erwärmung im Bereich einer elektronischen Schaltung ein elektrischer Defekt als technische Information zugeordnet wird,
- einer übermäßigen Erwärmung im Bereich eines Antriebsmotors ein Motordefekt als technische Information zugeordnet wird,
- einer übermäßigen Vibration eine gelöste oder gelockerte Schraubverbindung als technische Information zugeordnet wird,
- einer (optisch erfassten) Verlagerung eines Schraubenkopfes oder einer Mutter eine gelöste oder gelockerte Schraubverbindung als technische Information zugeordnet wird und/oder
- einer unterdurchschnittlich langsamen Bewegungsgeschwindigkeit übermäßiger Schlupf auf den Fördervorrichtungen (z.B. verölte Förderrolle) als technische Information zugeordnet wird.

In der obigen Aufstellung ist unter einem "Defekt" sowohl ein sich anbahnender als auch ein bereits vorliegender Defekt zu verstehen. Insbesondere sind einem sich anbahnenden Defekt andere Schwellwerte einer festgestellten Messdatenabweichung oder einer festgestellten Anomalie zugeordnet als einem bereits vorliegenden Defekt. Insbesondere wird auch eine unterdurchschnittlich langsame Bewegungsgeschwindigkeit als Anomalie oder sogar Defekt qualifiziert.

Weiterhin ist es vorteilhaft, wenn die technische Information und die Abweichung in einen lernfähigen Algorithmus eingespeist werden und wenn durch den lernfähigen Algorithmus eine Korrelation zwischen der technischen Information und der Abweichung oder mehreren Abweichungen oder eine Wahrscheinlichkeit für die Richtigkeit der Zuordnung der technischen Information zu der Abweichung oder mehreren Abweichungen für eine Vielzahl von Abweichungen berechnet wird. Für den Menschen kann die Zuordnung einer technischen Information zu einer bestimmten Klasse von Abweichungen schwierig sein, denn die einer technischen Information zugeordneten Abweichungen sind nicht notwendigerweise gleich, sondern können sich zum Teil erheblich voneinander unterscheiden. Lernfähige Algorithmen sind in besonderer Weise dazu geeignet, Korrelationen zwischen technischen Informationen und Abweichungen aufzuspüren, selbst dann, wenn bestimmte Zusammenhänge für den Menschen nicht von Vorneherein erkennbar sind. Dies ist im Besonderen der Fall, wenn eine Korrelation mehrerer physikalischer Parameter zu einer technischen Information vorliegt. Im Laufe der Zeit kann so eine Wissensbasis angelegt und verbessert werden, welche hilft, zukünftig auftretende Anomalien rasch und korrekt zu einer technischen Information zuordnen zu können.

Ein "lernfähiger Algorithmus" generiert Wissen aus Erfahrung und lernt dazu aus Beispielen und kann diese nach Beendigung der Lernphase verallgemeinern. Im Rahmen der Lernphase baut der lernfähige Algorithmus ein statistisches Modell auf, das auf Trainingsdaten beruht. Beispiele für lernfähige Algorithmen sind beispielsweise künstliche neuronale Netze, selbstlernende Entscheidungsbäume sowie genetische Algorithmen. Die beschriebene Vorgangsweise ist auch unter dem Begriff "maschinelles Lernen" bekannt. Im Rahmen der Erfindung kann die Lern- oder Trainingsphase insbesondere ganz oder teilweise im laufenden Betrieb des Lager- und Kommissioniersystems erfolgen.

Vorteilhaft ist es auch, wenn eine Wahrscheinlichkeit für die Richtigkeit der technischen Information gemeinsam mit dieser technischen Information ausgegeben wird und/oder die technische Information nur dann ausgegeben wird, wenn die Wahrscheinlichkeit für die Richtigkeit der Information einen Schwellwert überschreitet, wenn diese also verlässlich ist. Auf diese Weise wird vermieden, dass der Betreiber des Lager- und Kommissioniersystems durch eine technische Information, die nicht gesichert ist, fehlgeleitet wird und das gemeldete Symptom fehlinterpretiert. Beispielweise kann eine Ausgabe "Lagerdefekt wahrscheinlich" oder "Lagerdefekt mit einer Wahrscheinlichkeit von 75%" erfolgen. Denkbar ist auch, dass die Ausgabe beispielsweise unter einem Wert von 10% Wahrscheinlichkeit unterdrückt wird.

Vorteilhaft ist es weiterhin, wenn mobile Messwert-Erfassungseinheiten mehrerer Lager- und Kommissioniersysteme dieselbe Datenbank und/oder denselben Algorithmus verwenden. Auf diese Weise kann das Wissen über die in mehreren Lager- und Kommissioniersystemen auftretenden Anomalien und Defekte an einer Stelle konzentriert werden, wodurch der oben genannte Algorithmus, das oben genannten Modell und auch das Bedienungspersonal eines Lager- und Kommissioniersystems von dem in einem anderen Lager- und Kommissioniersystem gesammelten Wissen profitieren kann. Insgesamt wird der Wartungsaufwand für eine Vielzahl von Lager- und Kommissioniersystemen dadurch verringert. Insbesondere besteht auch die Möglichkeit einer zentralen Überwachungsstelle für eine Vielzahl von Lager- und Kommissioniersystemen, wodurch das Wissen über die in mehreren Lager- und Kommissioniersystemen auftretenden Anomalien und Defekte auch in personeller Hinsicht an einem Ort konzentriert wird. Dadurch wird der Wartungsaufwand für eine Vielzahl von Lager- und Kommissioniersystemen weiter verringert. "Dieselbe Datenbank" oder "derselbe Algorithmus" kann auch mehrere gleiche Instanzen der Datenbank oder des Algorithmus (oder dessen Datenbasis) umfassen oder zumindest gleiche Teile mehrerer unterschiedlicher Datenbanken oder Algorithmen (oder deren Datenbasen). Letzteres heißt, dass sich die Begriffe auch auf eine gemeinsame Schnittmenge von Datenbanken oder Algorithmen beziehen können. Daten betreffend das offenbarte Verfahren können auch Teile eines "Data-Lakes" sein beziehungsweise in diesem gespeichert sein.

In einer weiteren vorteilhaften Ausführungsform des Lager- und Kommissioniersystems umfasst dieses eine Fernsteuerung, die
- zum Empfang eines Messwerts, eines zeitlichen Verlaufs eines Messwerts und/oder einer örtlichen Verteilung von Messwerten eines physikalischen Parameters (insbesondere in Echtzeit) ausgebildet ist und
- zur Übermittlung von Steuerbefehlen an die mobile Messwert-Erfassungseinheit sowie an die Fördervorrichtungen des Lager- und Kommissioniersystems, mit denen die mobile Messwert-Erfassungseinheit bewegt wird, ausgebildet ist (insbesondere in Echtzeit). Demgemäß wird vorteilhaft ein Messwert, ein zeitlicher Verlauf eines Messwerts und/oder eine örtliche Verteilung von Messwerten eines physikalischen Parameters an eine Fernsteuerung beziehungsweise eine Bedienperson übermittelt (insbesondere in Echtzeit), und die mobile Messwert-Erfassungseinheit sowie die Fördervorrichtungen des Lager- und Kommissioniersystems, mit denen die mobile Messwert-Erfassungseinheit bewegt wird, empfangen Steuerbefehle von dieser Fernsteuerung beziehungsweise von dieser Bedienperson und führen diese (insbesondere in Echtzeit) aus.

Insbesondere ist die Fernsteuerung also mit einem übergeordneten zentralen Steuersystem des Lager- und Kommissioniersystems verbunden (z.B. mit einem Materialflussrechner oder einem Warehouse Management System), um eine gezielte Bewegung der Fördervorrichtungen des Lager- und Kommissioniersystems veranlassen zu können. Die Messdaten können dabei in Echtzeit an die Fernsteuerung übermittelt werden, oder die Messdaten werden zwischengespeichert und zu einem späteren Zeitpunkt an die Steuerung übermittelt. Ebenso kann die Bewegungsbahn beziehungsweise Route, auf welcher die mobile Messwert-Erfassungseinheit durch das Lager- und Kommissioniersystem bewegt werden soll, in Echtzeit vorgegeben oder vorprogrammiert werden. Insbesondere ist auch die bloße Vorgabe von Wegpunkten möglich, welche die mobile Messwert-Erfassungseinheit passieren soll, wobei die konkrete Umsetzung, das heißt die Bestimmung einer Bewegungsbahn beziehungsweise Route, welche diese Wegpunkte enthält, dem übergeordneten zentralen Steuersystem des Lager- und Kommissioniersystems überlassen wird, beziehungsweise von diesem vorgenommen wird.

Günstig ist es weiterhin, wenn das Lager- und Kommissioniersystem eine Ladestation für eine autarke Energieversorgung (z.B. einen Akkumulator) der mobilen Messwert-Erfassungseinheit aufweist. Auf diese Weise kann ein leerer Akkumulator der mobilen Messwert-Erfassungseinheit wieder aufgeladen werden. Insbesondere kann sich die Ladestation an einem Lagerplatz im Lagerbereich befinden.

Günstig ist es darüber hinaus, wenn die mobile Messwert-Erfassungseinheit in einen Anzeigemodus schaltbar ist, in dem sie am Ort, an dem eine Anomalie oder eine über der vorgegebenen Schwelle liegende Abweichung festgestellt wurde, von den Fördervorrichtungen des Lager- und Kommissioniersystems angehalten wird und dort ein optisches und/oder akustisches Signal abgibt. Auf diese Weise kann der Ort einer festgestellten Anomalie oder eines festgestellten Defekts auf einfache Weise im Lager- und Kommissioniersystem angezeigt werden. Ein Lesen von Lage- und Schaltplänen zum Auffinden des oben genannten Orts kann daher entfallen. Die Arbeit des Bedien- und Wartungspersonals wird daher deutlich vereinfacht. Die Abgabe von weiteren Signalen, beispielsweise in Form von Textnachrichten, ist durch die Abgabe des oben genannten, optischen und/oder akustischen Signals nicht ausgeschlossen. Beispielsweise kann eine Bedienperson Informationen über den Ort einer festgestellten Anomalie oder eines festgestellten Defekts in Textform, in Form eines Lageplans oder in Form von Richtungsangaben (im Sinne eines Navigationssystems) erhalten.

Weiterhin ist es von Vorteil, wenn die mobile Messwert-Erfassungseinheit oder eine Reparatur-Einheit in einen Reparaturmodus schaltbar ist, in dem sie Ersatzteile und/oder Hilfsmittel, welche zur Behebung eines festgestellten Defekts dienen, mit Hilfe der Fördervorrichtungen des Lager- und Kommissioniersystems zu dem am Ort, an dem der Defekt festgestellt wurde, transportiert. Die Reparatur-Einheit ist, so wie die mobile Messwert-Erfassungseinheit, für einen Transport auf der Transportfläche der motorisch angetriebenen Fördervorrichtungen des Lager- und Kommissioniersystems entlang der Bewegungsbahn und/oder für einen Zwischenhalt auf der Lagerfläche der Lagerplätze des Lager- und Kommissioniersystems, welche auf der Bewegungsbahn liegt, ausgebildet. Insbesondere kann die Reparatur-Einheit auch ein oben beschriebenes Ladehilfsmittel, beispielweise einen Behälter umfassen. Durch die vorgeschlagenen Maßnahmen wird das Bedien- und Wartungspersonal deutlich entlastet, da die für eine Behebung eines festgestellten Defekts benötigten Ersatzteile, Hilfsmittel und Werkzeuge mithilfe der Fördervorrichtungen an den Ort, an dem der Defekt festgestellt wurde, transportiert werden. Der Vorteil der vorgestellten Ausführungsform tritt daher insbesondere dann besonders zutage, wenn der Ort, an dem ein Defekt zu beheben ist, schwer zugänglich ist. An dieser Stelle wird auch angemerkt, dass die vorgeschlagenen Maßnahmen auch unabhängig von den Merkmalen der unabhängigen Patentansprüche angewandt werden können. Die Reparatur-Einheit kann somit die Basis für eine unabhängige Teilanmeldung bilden. Vorteilhaft ist es im gegebenen Zusammenhang, wenn die mobile Messwert-Erfassungseinheit oder die Reparatur-Einheit im Reparaturmodus am Ort, an dem der Defekt festgestellt wurde, ein optisches und/oder akustisches Signal abgibt. Die im vorhergehenden Absatz dazu offenbarten Vorteile gelten hier in gleicher Weise.

Günstig ist es weiterhin, wenn die Erfassung eines Messwerts, eines zeitlichen Verlaufs eines Messwerts und/oder einer örtlichen Verteilung von Messwerten eines physikalischen Parameters im laufendenden Betrieb des Lager- und Kommissioniersystems erfolgt, in dem gleichzeitig Waren und die mobile Messwert-Erfassungseinheit im Lager- und Kommissioniersystem transportiert werden. Das heißt die Erfassung von Messdaten erfolgt im laufenden Betrieb des Lager- und Kommissioniersystems, weswegen die Leistungsfähigkeit desselben durch die Erfassung der Messdaten nicht eingeschränkt wird.

Günstig ist es aber auch, wenn die Erfassung eines Messwerts, eines zeitlichen Verlaufs eines Messwerts und/oder einer örtlichen Verteilung von Messwerten eines physikalischen Parameters in einem Analysemodus des Lager- und Kommissioniersystems erfolgt, in dem die mobile Messwert-Erfassungseinheit alleine im Lager- und Kommissioniersystem bewegt wird. Auf diese Weise können störende Einflüsse bei der Erfassung von Messdaten verringert beziehungsweise minimiert werden. Beispielsweise wird die Erfassung von Audiodaten in nur geringer Weise von Hintergrundgeräuschen beeinflusst. Zum Beispiel kann die Erfassung von Messdaten in der Nacht erfolgen. Die genannten Vorteile gelten natürlich auch für die teilweise Stilllegung des Lager- und Kommissioniersystems, das heißt wenn sich die mobile Messwert-Erfassungseinheit alleine in einem Teilbereich des Lager- und Kommissioniersystems bewegt.

Vorteilhaft ist es weiterhin, wenn
- eine Störung oder ein Defekt im Lager- und Kommissioniersystem festgestellt und der Ort der Störung oder des Defekts ermittelt wird,
- die mobile Messwert-Erfassungseinheit an den besagten Ort transportiert wird und
- ein Messwert, ein zeitlicher Verlauf eines Messwerts und/oder eine örtliche Verteilung von Messwerten eines physikalischen Parameters am besagten Ort erfasst wird.

Die Störung oder der Defekt wird bei dieser Ausführungsform nicht notgedrungen durch die mobile Messwert-Erfassungseinheit festgestellt, sondern kann mithilfe einer anderen im Lager- und Kommissioniersystem vorhandenen (insbesondere ortsfest installierten) Sensorik detektiert werden. Auch wäre möglich, dass die Störung oder der Defekt durch eine andere mobile Messwert-Erfassungseinheit festgestellt wird als jener, die an den Ort der Störung oder des Defekts bewegt wird. Mithilfe der an den Ort der Störung oder des Defekts transportierten Messwert-Erfassungseinheit können zusätzliche Daten, welche die Störung oder den Defekt betreffen, erfasst werden. Beispielsweise können Infrarotaufnahmen, Videoaufnahmen oder Audioaufnahmen von jenem Ort erstellt werden, für den eine Störung oder ein Defekt ermittelt wurde. Auf diese Weise kann die Störung oder der Defekt näher charakterisiert werden, auch wenn eine ortsfest installierte Sensorik hierzu nicht in der Lage ist. Der Transport der mobilen Messwert-Erfassungseinheit an den Ort der Störung oder des Defekts sowie die Erfassung von Messdaten kann durch eine zentrale Steuerung des Lager- und Kommissioniersystems ausgelöst beziehungsweise gesteuert werden. Insbesondere kann für die genannten Zwecke auch die bereits weiter oben offenbarte Fernsteuerung eingesetzt werden.

Weiterhin ist es auch von Vorteil, wenn personenbezogene Daten in einer Audioaufnahme und/oder in einer Aufnahme eines stillstehenden oder bewegten Bilds gelöscht oder unkenntlich gemacht werden. Dadurch kann der personenbezogene Datenschutz gewährleistet werden, beispielsweise wenn ein Gespräch zwischen Personen unbeabsichtigt aufgezeichnet wird.

Erfindungsgemäß erweist es sich von Vorteil, wenn die Ortung der mobilen Messwert-Erfassungseinheit mit Hilfe des zentralen Steuersystems oder durch die mobile Messwert-Erfassungseinheit selbst erfolgt. Erfolgt die Ortung der mobilen Messwert-Erfassungseinheit mit Hilfe des zentralen Steuersystems, so kann dies in derselben Weise geschehen, wie die Ortung der Waren, der Liegewaren-Ladehilfsmittel und der Hängetaschen. Beispielsweise kann die Ortung der mobilen Messwert-Erfassungseinheit daher mit Hilfe von Wegsignalen der bewegten Transportfläche geschehen (z.B. mit Hilfe von Wegmarkierungen auf einem Förderband, die über einen optischen oder magnetischen Sensor ausgewertet werden) oder aber auch mit Drehsignalen, die in motorischen Anrieben der Fördervorrichtung ermittelt werden (z.B. über einen Hallsensor eines bürstenlosen Gleichstrommotors, über die Steuersignale für einen Antriebsmotor oder auch über einen Drehwinkelgeber im Antriebsmotor oder im Antriebsstrang). Beispielweise können über den Umfang einer rotierenden Förderrolle einer Fördervorrichtung mit den Drehsignalen wiederum Wegsignale berechnet werden.

Zusätzlich können auch Lichtschranken, Kameras, Barcode-Lesegeräte und/oder RFID-Lesegeräte für die Ortung der mobilen Messwert-Erfassungseinheit eingesetzt werden, die entlang der Fördertechnik angeordnet sind. Ortsfeste Lichtschranken, Kameras, Barcode-Lesegeräte und RFID-Lesegeräte dienen dabei vorwiegend der Bestimmung der Absolutposition der mobilen Messwert-Erfassungseinheit, wohingegen Weg- und Drehsignale zur Bestimmung der Relativposition der mobilen Messwert-Erfassungseinheit ausgehend von einem Bezugsort dienen. Der Bezugsort kann insbesondere durch eine ortsfest installierte Lichtschranke oder Kamera oder durch ein ortsfest installiertes Barcode-Lesegerät oder RFID-Lesegerät gegeben sein.

Die Ortung der mobilen Messwert-Erfassungseinheit kann aber beispielsweise auch durch Triangulation, Entfernungsmessung oder Laufzeitmessung erfolgen, etwa mit Hilfe von Indoor-GPS (Global Positioning System), Bluetooth oder WLAN (Wireless Local Area Network). Beispielsweise wird die Position der mobilen Messwert-Erfassungseinheit also durch Messen der Entfernung zu Bezugspunkten, deren Position bekannt ist, bestimmt, durch Messen der Laufzeit eines (Funk)signals zwischen der mobilen Messwert-Erfassungseinheit und solchen Bezugspunkten und/oder durch Messen eines Winkels zu solchen Bezugspunkten. Aus der Laufzeit eines Signals kann wiederum die Entfernung zu diesem Bezugspunkt berechnet werden da die Signalgeschwindigkeit bekannt ist. Insbesondere kann der Bezugspunkt durch eine Sende- und/oder Empfangsstation für ein (Funk)signal gebildet sein und im Besonderen nach dem Standard für GPS, Bluetooth oder WLAN arbeiten. An dieser Stelle wird angemerkt, dass die Ortung der mobilen Messwert-Erfassungseinheit basierend auf Triangulation, Entfernungsmessung oder Laufzeitmessung durch die mobile Messwert-Erfassungseinheit selbst erfolgen kann oder aber auch durch das zentrale Steuersystem, das in Verbindung mit den erwähnten Sende- und/oder Empfangsstation steht.

Erfindungsgemäß erweist es sich von Vorteil, wenn die Position der mobilen Messwert-Erfassungseinheit durch Wegmessung ausgehend von einem Bezugspunkt mit Hilfe eines in der mobilen Messwert-Erfassungseinheit eingebauten Wegsensors erfolgt. Beispielsweise kann dazu ein kapazitiver, induktiver oder optischer Sensor (insbesondere eine Kamera) eingesetzt werden, der auf ortsfeste Teile der Fördertechnik oder des Lagerbereichs ausgerichtet ist. Beispielsweise kann der zurückgelegte Weg durch optische Bildverarbeitung von Bildern ermittelt werden, die mit einer Kamera aufgenommen werden. Auch Sensoren nach der Art von optischen Sensoren, wie sie zum Beispiel in Computer-Mäusen eingesetzt werden, können für die Wegmessung verwendet werden. Denkbar wäre weiterhin auch, die Förderrollen zu zählen, an denen die mobile Messwert-Erfassungseinheit vorbeibewegt wurde, beispielsweise optisch oder induktiv. Ein Beschleunigungssensor kann beispielsweise dazu eingesetzt werden, um Bahnkrümmungen (z.B. Kurven, Weichen, Steigungen, usw.) zu ermitteln. Grundsätzlich wäre mit dem Beschleunigungssensor aber auch eine Wegmessung möglich, wenn das Sensorsignal entsprechend zeitlich integriert wird.

Vorteilhaft ist es auch, wenn mit Hilfe der für die Messwert-Erfassungseinheit ermittelten Positionen eine Karte des Lager- und Kommissioniersystems angefertigt wird und die ermittelten Messwerte (entsprechend einer örtlichen Verteilung von Messwerten), eine Abweichung des zum ersten Zeitpunkt erfassten Messwerts von dem zum zweiten Zeitpunkt erfassten Messwert (entsprechend einer örtlichen Verteilung von Abweichungen), eine Abweichungs-Information, eine technische Information, eine Störung und/oder ein Defekt in die Karte eingetragen werden. Auf diese Weise können die angegebenen Daten gut in graphischer Form dargestellt werden. Vorteilhaft werden die Daten für die dafür nötige Karte von der mobilen Messwert-Erfassungseinheit selbst ermittelt. Grundsätzlich können aber auch Konstruktionsdaten des Lager- und Kommissioniersystems (z.B. CAD-Daten) für die Anfertigung einer Karte herangezogen werden. Oft stehen diese aber nicht zur Verfügung oder stimmen nicht mit der Realität überein. Durch Vermessen des Lager- und Kommissioniersystems mit der mobilen Messwert-Erfassungseinheit werden diese Probleme überwunden. Zu diesem Zweck kann die mobile Messwert-Erfassungseinheit auch einen Laser-Scanner umfassen. Generell ist es auch von Vorteil, wenn Zusatzinformationen in die Karte des Lager- und Kommissioniersystems eingetragen werden können. Beispielsweise können Anlagenteile auf der Karte benannt werden, z.B. mit "Förderstrecke Nummer 1" und so weiter.

Von Vorteil ist es schließlich auch, wenn die mit der Messwert-Erfassungseinheit ermittelte Karte des Lager- und Kommissioniersystems mit Konstruktionsdaten des Lager- und Kommissioniersystems (z.B. mit CAD-Daten) abgeglichen wird. Auf diese Weise wird die von der Messwert-Erfassungseinheit ermittelte Karte des Lager- und Kommissioniersystems mit Konstruktionsdaten desselben (soweit wie möglich) in Übereinstimmung gebracht. Auf diese Weise können beispielsweise Messfehler bei der Erfassung der Position der mobilen Messwert-Erfassungseinheit, welcher der Karte zugrunde gelegt werden, korrigiert werden.

An dieser Stelle wird angemerkt, dass sich die zu der vorgestellten Lager- und Kommissioniersystem offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: eine beispielhafte mobile Messwert-Erfassungseinheit, welche stehend beziehungsweise liegend auf Förderrollen bewegt wird, in Schrägansicht;
- Fig. 2: eine beispielhafte mobile Messwert-Erfassungseinheit, welche hängend auf einer Hängeförderbahn bewegt wird, in Schrägansicht;
- Fig. 3: ein beispielhaftes und schematisch dargestelltes Lager- und Kommissioniersystem in Draufsicht;
- Fig. 4: ein funktionales Schaubild eines beispielhaften Lager- und Kommissioniersystems mit einer mobilen Messwert-Erfassungseinheit;
- Fig. 5: ähnlich wie Fig. 4, jedoch mit einer Fernsteuerung für die mobile MesswertErfassungseinheit und einer zentralen Datenbank;
- Fig. 6: Beispiele für einen Hänge-Transportträger in Schrägansicht und
- Fig. 7: ein Beispiel für ein autonomes Flurförderfahrzeug in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

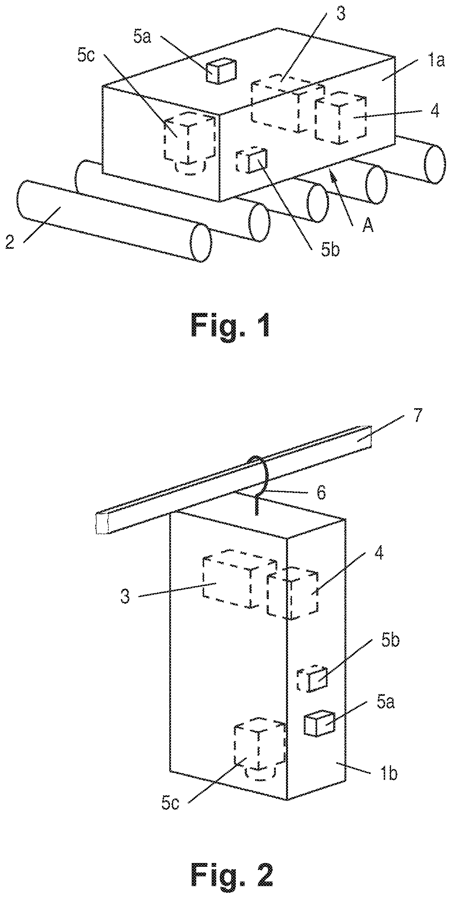

Fig. 1 zeigt eine beispielhafte mobile Messwert-Erfassungseinheit 1a, welche stehend beziehungsweise liegend auf Förderrollen 2 bewegt wird, in Schrägansicht. Die mobile Messwert-Erfassungseinheit 1a umfasst in diesem Beispiel eine autarke Energieversorgung 3, eine zentrale Recheneinheit 4 und mehrere Sensoren 5a..5c.

Die zentrale Recheneinheit 4 kann insbesondere einen Mikrocontroller, einen Industrie-PC (insbesondere in Verbindung mit einer Datenbank) oder eine Speicherprogrammierbare Steuerung, kurz "SPS", umfassen oder durch diese gebildet sein.

Die Förderrollen 2 bilden eine Ausführungsvariante von motorisch angetriebenen Fördervorrichtungen einer Fördertechnik, welche zum Transportieren von Waren und der mobilen Messwert-Erfassungseinheit 1a innerhalb eines Lager- und Kommissioniersystems ausgebildet ist. Eine Transportfläche für die Waren und die mobile Messwert-Erfassungseinheit 1a wird durch eine (virtuelle) Ebene gebildet, welche die Förderrollen 2 auf deren Oberseite tangential berührt.

Umgekehrt, weist die mobile Messwert-Erfassungseinheit 1a einen Transportboden A auf, mit dessen Hilfe die mobile Messwert-Erfassungseinheit 1a stehend oder liegend auf der Transportfläche der Förderrollen 2 transportierbar ist. Die Förderrollen 2 bilden daher auch eine Liegeförderbahn. In der Fig. 1 sind der Transportboden A der mobilen Messwert-Erfassungseinheit 1a und die Transportfläche der Förderrollen 2 deckungsgleich.

Der Sensor 5a ist im gezeigten Beispiel außen am Gehäuse der mobilen Messwert-Erfassungseinheit 1a angeordnet und beispielsweise als Temperatursensor ausgeführt. Der Sensor 5b befindet sich im gezeigten Beispiel im Inneren der mobilen Messwert-Erfassungseinheit 1a und ist beispielsweise als Vibrationssensor/Beschleunigungssensor (z.B. auf Basis einer Piezo-Technologie) ausgeführt. Der Sensor 5c ist schließlich als Kamera für den sichtbaren Wellenlängenbereich und/oder den Infrarotbereich ausgebildet und in diesem Beispiel nach unten ausgerichtet. Eine andere Ausrichtung der Kamera 5c ist natürlich möglich. Denkbar ist auch, dass die Kamera 5c motorisch verschwenkt werden kann. Die mobile Messwert-Erfassungseinheit 1a kann also auch Motoren und Aktoren aufweisen, vorzugsweise weist sie aber keinen motorischen Antrieb zur Bewegung der mobilen Messwert-Erfassungseinheit 1a auf, so wie das in der Fig. 1 der Fall ist.

Die oben genannten Sensortypen sind lediglich Beispiele, und die mobile Messwert-Erfassungseinheit 1a könnte alternativ oder zusätzlich auch ein Mikrofon, einen Neigungsensor, einen RFID-Transponder, Sensoren für die Triangulation, Entfernungsmessung oder Laufzeitmessung (z.B. für die Positionsbestimmung mittels Indoor-GPS, Bluetooth oder WLAN) und/oder einen Gassensor aufweisen. Der RFID-Transponder kann insbesondere zur Positionsbestimmung der mobilen Messwert-Erfassungseinheit 1a eingesetzt werden, wenn die Position von RFID-Lesegeräten im Lager- und Kommissioniersystem, welche die mobile Messwert-Erfassungseinheit 1a passiert, bekannt ist.

Fig. 2 zeigt ein weiteres Beispiel für eine mobile Messwert-Erfassungseinheit 1b, welche der in Fig. 1 offenbarten mobilen Messwert-Erfassungseinheit 1a sehr ähnlich ist. Im Unterschied dazu weist die mobile Messwert-Erfassungseinheit 1b aber einen Hänge-Transportträger 6 auf, mit dessen Hilfe die mobile Messwert-Erfassungseinheit 1b hängend auf einer Hängeförderbahn 7 eines Lager- und Kommissioniersystems transportiert wird.

Die Hängeförderbahn 7 bildet eine weitere Ausführungsvariante einer motorisch angetriebenen Fördervorrichtung einer Fördertechnik, welche zum Transportieren von Waren und der mobilen Messwert-Erfassungseinheit 1b innerhalb eines Lager- und Kommissioniersystems ausgebildet sind. Eine Transportfläche für die Waren und die mobile Messwert-Erfassungseinheit 1b wird in diesem Beispiel durch die Oberseite der Hängeförderbahn 7 gebildet. Die Hänge-Transportträger 6 können durch einen Reibschlussantrieb und/oder einen Formschlussantrieb bewegt werden. Beispielsweise kann ein endlos umlaufendes Zugmittel, wie ein Riemen oder eine Kette, für den Transport der Waren und der mobilen Messwert-Erfassungseinheit 1b innerhalb eines Lager- und Kommissioniersystems vorgesehen sein. Eine solche Hängeförderbahn 7 und unterschiedliche Antriebssysteme sind beispielweise in der österreichischen Patentanmeldung A 2019/50092 beschrieben.

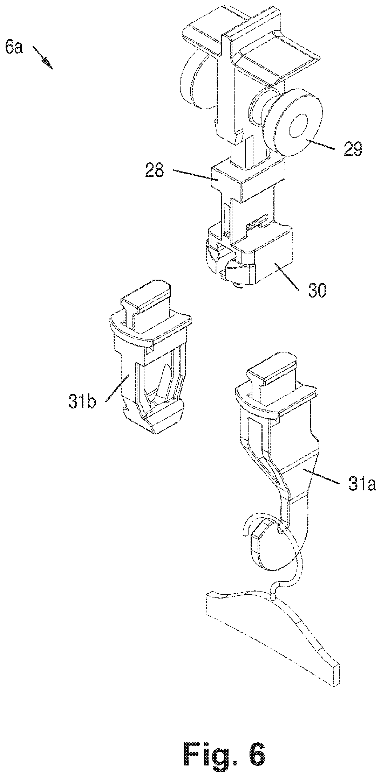

Der Hänge-Transportträger 6 ist in diesem Beispiel als Haken ausgeführt, er könnte aber auch einen Laufwagen umfassen oder durch diesen gebildet sein (siehe auch Fig. 6).

Denkbar ist weiterhin eine Kombination der in den Fig. 1 und Fig. 2 dargestellten Ausführungsformen. Beispielsweise könnte die in Fig. 2 offenbarte mobile Messwert-Erfassungseinheit 1b auch stehend beziehungsweise liegend auf den Förderrollen 2a der Fig. 1 transportiert werden. Mit anderen Worten kann eine mobile Messwert-Erfassungseinheit 1a, 1b abwechselnd stehend/liegend und hängend auf der Transportfläche der Fördervorrichtungen 2, 7 des Lager- und Kommissioniersystems transportiert werden.

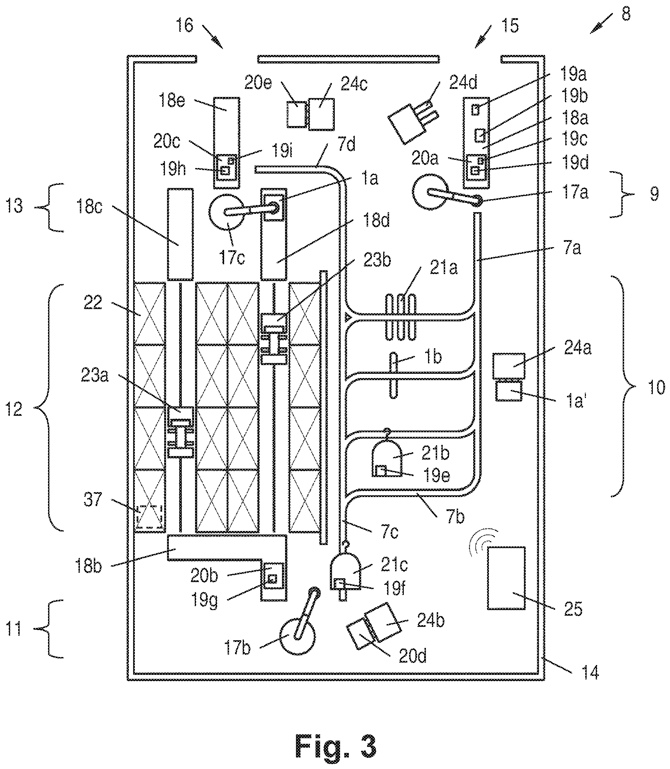

Die Fig. 3 zeigt nun eine schematische Darstellung eines beispielhaften Lager- und Kommissioniersystems 8 in Draufsicht.

Konkret sind eine erste Beladestation 9, ein Hängetaschen/Hängewaren-Lager 10, eine zweite Beladestation 11, ein Liegewaren-Warenlager 12 und eine Kommissionierstation 13 in einem Gebäude 14 untergebracht. Die erste Beladestation 9 und/oder zweite Beladestation 11 bildet nach dieser Ausführung insbesondere einen Arbeitsplatz zum Umpacken. Die Kommissionierstation 13 bildet nach dieser Ausführung insbesondere einen Arbeitsplatz zum Kommissionieren. Das Gebäude 14 weist zudem zwei Gebäudeöffnung 15 und 16 auf, welche als Wareneingang und/oder Warenausgang fungieren können.

Die erste Beladestation 9 kann einen ersten Roboter 17a, eine erste Andienposition auf einer Liegeförderbahn 18a und eine zweite Andienposition auf einer Hängeförderbahn 7a umfassen. Auf der Liegeförderbahn 18a sind beispielhaft mehrere Waren 19a.. 19d angeordnet. Die Waren 19c und 19d liegen dabei in einem Liegewaren-Ladehilfsmittel 20a, die Waren 19a und 19b liegen lose (das heißt, ohne Liegewaren-Ladehilfsmittel 20a) auf der Liegeförderbahn 18a. Die Liegeförderbahn 18a führt von der Gebäudeöffnung 15 zum ersten Roboter 17a, und die Hängeförderbahn 7a führt vom ersten Roboter 17a zum Hängetaschen/Hängewaren-Lager 10.

Das Hängetaschen/Hängewaren-Lager 10 umfasst mehrere Hängeförderbahnen 7b, die überwiegend der Lagerung dienen und auf denen beispielhaft einige Hängetaschen 21a, 21b sowie eine mobile Messwert-Erfassungseinheit 1b dargestellt sind. Die Hängetasche 21b ist dabei um 90° in die Zeichenebene gedreht gezeichnet, um die darin gelagerter Ware 19e darstellen zu können. Natürlich hängt die Hängetasche 21b in der Realität wie die Hängetaschen 21a nach unten. Vom Hängetaschen/Hängewaren-Lager 10 führt eine Hängeförderbahn 7c zur zweiten Beladestation 11. Die zweite Beladestation 11 kann einen zweiten Roboter 17b, eine erste Andienposition auf der Hängeförderbahn 7c und eine zweite Andienposition auf einer Liegeförderbahn 18b umfassen, wobei letztere vom zweiten Roboter 17b der zweiten Beladestation 11 zum Liegewaren-Warenlager 12 führt.

An der ersten Andienposition der zweiten Beladestation 11 befindet sich im gezeigten Beispiel eine Hängetasche 21c mit einer darin gelagerten Ware 19f. Die Hängetasche 21c ist, wie die Hängetasche 21b, der besseren Darstellbarkeit halber in die Zeichenebene gedreht gezeichnet. An der zweiten Andienposition der zweiten Beladestation 11 befindet sich im gezeigten Beispiel ein Liegewaren-Ladehilfsmittel 20b mit einer darin gelagerten Ware 19g.

Das Warenlager 12 umfasst in diesem Beispiel mehrere Lagerregale 22 mit jeweils mehreren Lagerplätzen, sowie Regalbediengeräte 23a und 23b, die in zwischen den Lagerregalen 22 verlaufenden Regalgassen verfahren. Am oberen Ende der Regalgassen sind zwei Liegeförderbahnen 18c, 18d angeordnet, die vom Warenlager 12 zur Kommissionierstation 13 führen.

Die Kommissionierstation 13 kann einen dritten Roboter 17c, eine erste Andienposition auf der Liegeförderbahn 18c, eine zweite Andienposition auf der Liegeförderbahn 18d und eine dritte Andienposition auf einer Liegeförderbahn 18e umfassen, wobei letztere den dritten Roboter 17c mit der Gebäudeöffnung 16 verbindet.

Weiterhin ist in der Fig. 3 auch eine Hängeförderbahn 7d dargestellt, welche das Hängetaschen/Hängewaren-Lager 10 mit der Kommissionierstation 13 verbindet.

An der zweiten Andienposition auf der Liegeförderbahn 18d befindet sich in diesem Beispiel eine mobile Messwert-Erfassungseinheit 1a, und an der dritten Andienposition auf der Liegeförderbahn 18e befindet sich in diesem Beispiel ein Liegewaren-Ladehilfsmittel 20c mit zwei darin gelagerte Waren 19h, 19i.

Das in der Fig. 3 dargestellte Lager- und Kommissioniersystem 8 kann auch ein autonomes Flurförderfahrzeug 24a..24d oder mehrere autonome Flurförderfahrzeuge 24a..24d mit einer darauf transportierten mobilen Messwert-Erfassungseinheit 1a' und darauf transportierten Liegewaren-Ladehilfsmitteln 20d, 20e umfassen. Die autonomen Flurförderfahrzeuge 24a und 24b befinden sich dabei konkret zwischen der ersten Beladestation 9 und der zweiten Beladestation 11, und die autonomen Flurförderfahrzeuge 24c und 24d befinden sich zwischen der ersten Beladestation 9 und der Kommissionierstation 13.

Auf den Hängeförderbahnen 7a..7d des in der Fig. 3 dargestellten Lager- und Kommissioniersystems 8 können zusätzlich oder alternativ zu den dargestellten Hängetaschen 21a..21c auch Hängewaren (ohne Hängetaschen) transportiert werden.

Schließlich zeigt die Fig. 3 eine optionale Ladestation 37 für eine autarke Energieversorgung (z.B. einen Akkumulator) der mobilen Messwert-Erfassungseinheit 1a, 1a', 1b. Auf diese Weise kann ein leerer Akkumulator der mobilen Messwert-Erfassungseinheit wieder aufgeladen werden. Konkret befindet sich die Ladestation 37 an einem Lagerplatz im Lagerbereich 12, sie könnte sich aber auch an anderer Stelle befinden, beispielsweise an der Fördertechnik.

Die Funktion des in der Fig. 3 dargestellten Lager- und Kommissioniersystems 8 ist wie folgt:
Über die Gebäudeöffnungen 15 und 16 können Waren19a..19i angeliefert und im Hängetaschen/Hängewaren-Lager 10 oder im Liegewaren-Warenlager 12 eingelagert werden. Waren19a..19i können aber auch aus dem Hängetaschen/Hängewaren-Lager 10 oder aus dem Liegewaren-Warenlager 12 ausgelagert und über die Gebäudeöffnungen 15 und 16 abtransportiert werden.

Die Liegeförderbahnen 18a..18e, die Hängeförderbahnen 7a..7d, die Regalbediengeräte 23a, 23b und die autonomen Flurförderfahrzeuge 24a..24d dienen dabei, sofern vorhanden, dem Transport der Waren19a..19i innerhalb des Lager- und Kommissioniersystems 8. Die Roboter 17a..17c dienen dem Umladen von Waren19a..19i zwischen den verschiedenen Liegeförderbahnen 18a..18e und Hängeförderbahnen 7a..7d. Anhand eines illustrativen Beispiels werden die Vorgänge im Lager- und Kommissioniersystems 8 näher beleuchtet.

Beispielsweise können Waren 19a..19d an der Gebäudeöffnung 15 des Lager- und Kommissioniersystems 8 bereitgestellt, auf die Liegeförderbahn 18a abgegeben, und an der ersten Andienposition der ersten Beladestation 9 angedient werden. An der zweiten Andienposition der ersten Beladestation 9 wird eine (leere) Hängetasche 21a..21c angedient. Die Waren 19a..19d werden in Folge vom ersten Roboter 17a von der Liegeförderbahn 18a oder vom Liegewaren-Ladehilfsmittel 20a aufgenommen und in die angediente Hängetasche 21a..21c geladen. Die beladenen Hängetaschen 21a..21c werden in Folge in das Hängetaschen/Hängewaren-Lager 10 transportiert.

In einem weiteren Schritt werden die in den Hängetaschen 21a..21c enthaltenen Waren 19a..19d vom zweiten Roboter 17b der zweiten Beladestation 11 von den Hängetaschen 21a..21c in ein Liegewaren-Ladehilfsmittel 20b umgeladen. Dazu wird eine beladene Hängetasche 21a..21c an der ersten Andienposition der zweiten Beladestation 11 und ein Liegewaren-Ladehilfsmittel 20b an der zweiten Andienposition der zweiten Beladestation 11 angedient. Im Anschluss wird das Liegewaren-Ladehilfsmittel 20b mit den umgeladenen Waren 19a..19d in das Liegewaren-Warenlager 12 eingelagert. Dazu wird das Liegewaren-Ladehilfsmittel 20b von der Liegeförderbahn 18b zu einem der beiden Regalbediengeräte 23a, 23b transportiert, von diesem übernommen und in das Lagerregal 22 eingelagert.

Wird ein Kommissionierauftrag zum Kommissionieren von Waren 19a..19d erfasst, so wird ein Liegewaren-Ladehilfsmittel 20b, welches die dem Kommissionierauftrag zugeordnete Waren 19a..19d enthält, mit einem der beiden Regalbediengeräte 23a, 23b aus dem Lagerregal 22 ausgelagert und auf die entsprechende Liegeförderbahnen 18c, 18d übergeben. Mit Hilfe der Liegeförderbahnen 18c, 18d wird die Ware 19a..19d zur ersten oder zweiten Andienposition der Kommissionierstation 13 transportiert und dort angedient. An der dritten Andienposition der Kommissionierstation 13 wird ein Liegewaren-Ladehilfsmittel 20c angedient. In Folge werden die dem Kommissionierauftrag zugeordneten Waren 19a..19d vom dritten Roboter 17c vom Liegewaren-Ladehilfsmittel 20b in das Liegewaren-Ladehilfsmittel 20c geladen. Denkbar ist natürlich auch, dass eine aus dem Hängetaschen/Hängewaren-Lager 10 stammende Ware 19a..19d über die Hängeförderbahn 7d zur Kommissionierstation 13 transportiert, dort angedient und in Folge vom dritten Roboter 17c in das Liegewaren-Ladehilfsmittel 20c geladen wird.

In einem weiteren Schritt erfolgt schließlich der Versand der Waren 19a.. 19d, indem das beladene Liegewaren-Ladehilfsmittel 20c von der Liegeförderbahnen 18e zur Gebäudeöffnung 16 gefördert und von dort abtransportiert wird.

An dieser Stelle wird nochmals darauf hingewiesen, dass das oben ausgeführte Beispiel rein illustrativ ist, und es noch viele weitere Möglichkeiten gibt, wie Waren 19a.. 19d im Lager- und Kommissioniersystem 8 gehandhabt werden.

Generell werden die Abläufe im Lager- und Kommissioniersystem 8 durch ein zentrales Steuersystem 25 gesteuert. Im gezeigten Beispiel ist eine Funkverbindung zu den Fördervorrichtungen des Lager- und Kommissioniersystems 8 angedeutet, selbstverständlich ist aber auch eine drahtgebundene Kommunikation möglich. Konkrete Ausführungsbeispiele für ein solches zentrales Steuersystem 25 sind ein Materialflussrechner oder ein Warehouse Management System.

In gleicher Weise wie die Waren 19a.. 19d, die Liegewaren-Ladehilfsmittel 20a..20e und die Hängetaschen 21a..21c werden die mobilen Messwert-Erfassungseinheiten 1a, 1a' und 1b durch das Lager- und Kommissioniersystem 8 bewegt.

Vorteilhaft ist es daher, wenn ein äußeres Gehäuse der mobilen Messwert-Erfassungseinheit 1a, 1a' und 1b in Form und/oder Größe einem Liegewaren-Ladehilfsmittel 20a..20e oder einer Hängetasche 21a..21c entspricht, das oder die dem Warentransport und der Warenlagerung im Lager- und Kommissioniersystem 8 dient.

Die mobile Messwert-Erfassungseinheit 1a, 1a' und 1b kann insbesondere als modulares System ausgestaltet sein, das in unterschiedliche Arten von Ladehilfsmitteln 20a..20e oder Hängetaschen 21a..21c integrierbar ist. Zum Beispiel können zumindest die autarke Energieversorgung 3, die zentrale Recheneinheit 4 und die Sensoren 5a..5c der mobilen Messwert-Erfassungseinheit 1a, 1a' und 1b auf einer Basisplatte aufgebaut oder in einem Basisgehäuse eingebaut sein, die oder das in Folge in ein Liegewaren-Ladehilfsmittel 20a..20e oder in eine Hängetasche 21a..21c eingebaut werden. Beispielsweise kann der Einbau durch Verspreizen der Basisplatte oder des Basisgehäuses im Liegewaren-Ladehilfsmittel 20a..20e oder in der Hängetasche 21a..21c oder durch Einkleben, Einschäumen oder Einschrauben der Basisplatte oder des Basisgehäuses in das Liegewaren-Ladehilfsmittel 20a..20e oder die Hängetasche 21a..21c erfolgen. In diesem Fall umfasst das Liegewaren-Ladehilfsmittel 20a..20e den Transportboden A oder die Hängetasche 21a..21c den Hänge-Transportträger 6 der mobilen Messwert-Erfassungseinheit 1a, 1a' und 1b.

Eine Bewegungsbahn, entlang welcher die mobilen Messwert-Erfassungseinheiten 1a, 1a' und 1b durch das Lager- und Kommissioniersystem 8 bewegt werden, verläuft daher entlang der durch die Fördervorrichtungen gebildeten Transportwege, das heißt entlang der Liegeförderbahnen 18a..18e und der Hängeförderbahnen 7a..7d, sowie entlang der Bewegungsbahnen der Regalbediengeräte 23a, 23b und der autonomen Flurförderfahrzeuge 24a..24d. Grundsätzlich zählen auch die Roboter 17a.. 17c zum Transportnetz des Lager- und Kommissioniersystems 8, sofern sie in der Lage sind, die mobilen Messwert-Erfassungseinheiten 1a, 1a' und 1b von einer Andienposition auf die eine andere Andienposition umzusetzen. In diesem Fall kann die mobile Messwert-Erfassungseinheit 1a, 1a', 1b abwechselnd stehend/liegend auf den Liegeförderbahnen 18a..18e und hängend auf den Hängeförderbahnen 7a..7d, transportiert werden.

Transportwege sind nicht notgedrungen starr angeordnet, sondern können von den autonomen Flurförderfahrzeugen 24a..24d bei Bedarf flexibel gebildet oder verändert werden. Eine Bewegungsbahn kann auch einen Lagerplatz beziehungsweise eine Lagerfläche inkludieren. Somit können von den mobilen Messwert-Erfassungseinheiten 1a, 1a' und 1b praktisch alle relevanten Orte (Förderabschnitte und Lagerbereiche) im Lager- und Kommissioniersystem 8 erreicht werden.

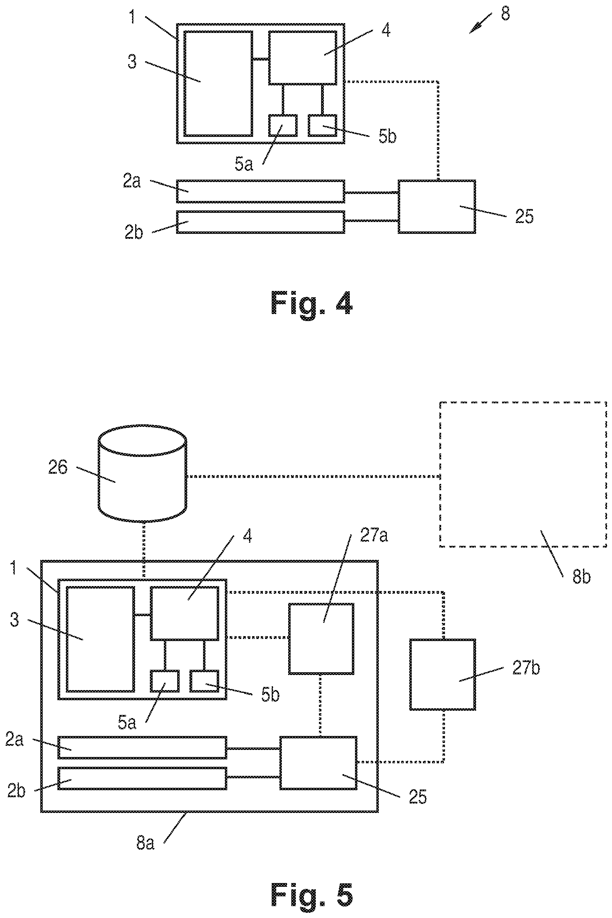

Die Bewegungsbahnen der mobilen Messwert-Erfassungseinheiten 1a, 1a' und 1b können beispielsweise vom übergeordneten zentralen Steuersystem 25 (zum Beispiel Materialflussrechner oder Warehouse Management System) des Lager- und Kommissioniersystems 8 vorgegeben werden. In diesem Fall werden von dem übergeordneten zentralen Steuersystem 25 also nicht nur die Bewegungen der Waren 19a.. 19d, der Liegewaren-Ladehilfsmittel 20a..20e und der Hängetaschen 21a..21c koordiniert, sondern es werden von dem übergeordneten zentralen Steuersystem 25 auch die Bewegungsbahnen der mobilen Messwert-Erfassungseinheiten 1a, 1a' und 1b vorgegeben. Alternativ kann eine Bewegungsbahn auch von einer mobilen Messwert-Erfassungseinheit 1a, 1a', 1b selbst oder einer Fernsteuerung für die mobilen Messwert-Erfassungseinheiten 1a, 1a' und 1b vorgegeben werden (siehe hierzu auch Fig. 5). Die Bewegungsbahnen können nach dem Zufallsprinzip vorgegeben werden. Die Bewegungsbahnen können alternativ auch von einer Bedienperson vorgegeben werden.

Konkret erfolgt eine Bewegung beziehungsweise ein Transport einer mobilen Messwert-Erfassungseinheit 1a, 1a', 1b auf der Transportfläche der motorisch angetriebenen Fördervorrichtungen des Lager- und Kommissioniersystems 8 entlang der Bewegungsbahn (vergleiche die Fig. 1 und 2). Eine mobile Messwert-Erfassungseinheit 1a, 1a' und 1b kann auch auf der Lagerfläche der Lagerplätze des Lager- und Kommissioniersystems 8 angehalten, das heißt abgestellt, abgelegt oder aufgehängt werden.

Auf der Bewegungsbahn wird ein Messwert, ein zeitlicher Verlauf eines Messwerts und/oder eine örtliche Verteilung von Messwerten eines physikalischen Parameters (Messdaten) mit Hilfe der Sensoren 5a..5c erfasst, und es wird der Ort im Lager- und Kommissioniersystem 8, an dem der Messwert, dessen zeitlicher Verlauf und/oder dessen örtliche Verteilung zu einem ersten Zeitpunkt erfasst wurde, gespeichert.

Messdaten können in Echtzeit an ein Empfangsgerät einer Bedienperson übermittelt werden, oder sie werden zwischengespeichert und zu einem späteren Zeitpunkt an das Empfangsgerät übermittelt. Die Übertragung kann beispielweise über eine Funkschnittstelle oder eine Drahtschnittstelle erfolgen. Letztere kann insbesondere an einer Ladestation für die autarke Energieversorgung der mobilen Messwert-Erfassungseinheit 1a, 1a' und 1b vorgesehen sein, welche in periodischen Abständen angefahren wird.

Die Erfassung von Messdaten durch die mobile Messwert-Erfassungseinheit 1a, 1a' und 1b kann während der Transportbewegung oder im Stillstand erfolgen. Beispielsweise kann die mobile Messwert-Erfassungseinheit 1a, 1a' und 1b auf einem Lagerplatz des Hängetaschen/Hängewaren-Lagers 10 oder des Liegewaren-Warenlagers 12 angehalten und dort, auch über einen längeren Zeitraum, Messdaten erfassen. Beispielsweise können auf diese Weise Vibrationen im Hängetaschen/Hängewaren-Lager 10 oder im Liegewaren-Warenlager 12 erfasst werden.

Je nach Ausführung der Sensoren 5a..5c kann
- als erfasster physikalischer Parameter ein Schalldruck vorgesehen sein und von einem Sensor 5a..5c ein Lautstärke-Messwert oder eine Audioaufnahme (und somit ein zeitlicher Verlauf des Schalldrucks) erfasst werden,
- als erfasster physikalischer Parameter eine Amplitude oder eine Frequenz einer mechanischen Vibration vorgesehen sein und von einem Sensor 5a..5c ein Messwert für die Amplitude und/oder die Frequenz der Vibration erfasst werden,
- als erfasster physikalischer Parameter eine Temperatur vorgesehen sein und von einem Sensor 5a..5c ein Temperatur-Messwert oder ein Infrarotbild (und somit eine örtliche Verteilung der Temperatur) erfasst werden,
- als erfasster physikalischer Parameter eine Helligkeit und/oder eine Farbe vorgesehen sein und von einem Sensor 5a..5c ein stillstehendes Bild (örtliche Verteilung von Helligkeit und/oder Farbe) oder eine bewegte Videoaufnahme (zeitlicher Verlauf der örtlichen Verteilung von Helligkeit und/oder Farbe) erfasst werden,
- als erfasster physikalischer Parameter eine Konzentration eines Gases (insbesondere von Sauerstoff) vorgesehen sein und von einem Sensor 5a..5c eine Gas-Konzentration erfasst werden und/oder
- als erfasster physikalischer Parameter eine Zeitspanne vorgesehen sein und von einer Zeitmesseinrichtung die Zeitspanne ermittelt werden, welche die mobile Messwert-Erfassungseinheit 1a, 1a' und 1b für eine Bewegung von einem ersten Ort an einen zweiten Ort benötigt.

Werden Bilddaten oder Audiodaten aufgenommen, so ist es von Vorteil, wenn personenbezogene Daten in einer Audioaufnahme und/oder in einer Aufnahme eines stillstehenden oder bewegten Bilds gelöscht oder unkenntlich gemacht werden. Auf diese Weise kann der personenbezogene Datenschutz gewährleistet werden, beispielsweise wenn ein Gespräch zwischen Personen unbeabsichtigt aufgezeichnet wird.

Besonders vorteilhaft ist eine Variante des vorgestellten Verfahrens, bei dem zumindest ein Messwert, zumindest ein zeitlicher Verlauf zumindest eines Messwerts und/oder zumindest eine örtliche Verteilung von Messwerten eines physikalischen Parameters oder mehrerer physikalischer Parameter einer Analyse zur Detektion einer Anomalie, entsprechend einer Abweichung von einem Normalzustand, unterzogen werden. Dadurch können bereits bestehende oder sich erst anbahnende Probleme im Lager- und Kommissioniersystem erkannt werden. Beispielsweise erlaubt die Erfassung eines Messwerts, eines zeitlichen Verlaufs eines Messwerts und/oder einer örtlichen Verteilung von Messwerten des zum ersten Zeitpunkt erfassten physikalischen Parameters im Wesentlichen am selben Ort zu einem zweiten Zeitpunkt die Detektion einer Anomalie in einem Lager- und Kommissioniersystem 8. Dazu kann eine Abweichung des zum ersten Zeitpunkt erfassten Messwerts von dem zum zweiten Zeitpunkt erfassten Messwert, des zum ersten Zeitpunkt erfassten zeitlichen Verlaufs des Messwerts von dem zum zweiten Zeitpunkt erfassten zeitlichen Verlauf des Messwerts und/oder der zum ersten Zeitpunkt erfassten örtlichen Verteilung der Messwerte von dem zum zweiten Zeitpunkt erfassten örtlichen Verteilung der Messwerte ermittelt werden. Überschreitet die ermittelte Abweichung eine vorgebbare Schwelle, dann wird einer Abweichungs-Information erzeugt und abgegeben.

Denkbar ist aber auch, dass zumindest ein Messwert, ein zeitlicher Verlauf zumindest eines Messwerts und/oder zumindest eine örtliche Verteilung von Messwerten eines physikalischen Parameters oder mehrerer physikalischer Parameter einer Analyse zur automatischen Detektion einer Anomalie unter Verwendung einer statistischen Signalauswertung oder unter Verwendung eines lernfähigen Algorithmus unterzogen werden und eine Abweichungs-Information erzeugt und abgegeben wird, wenn eine Anomalie, entsprechend einer Abweichung von einem Normalzustand, erkannt wurde. Beispielsweise können langsame Veränderungen in einer Zeitreihe von Messwerten ("Messwert-Drifts") auf ein sich anbahnendes Problem im Lager- und Kommissioniersystem 8 hindeuten. Aber auch rasche und starke Änderungen von Messwerten sind häufig Indikatoren für ein (insbesondere bereits bestehendes) Problem im Lager- und Kommissioniersystem 8. Für die Analyse von Messwertreihen einzelner physikalischer Parameter eignet sich vor allem die statistische Signalauswertung, wohingegen lernfähige Algorithmen (z.B. künstliche neuronale Netze, selbstlernende Entscheidungsbäume, genetische Algorithmen) vor allem für die Analyse von Messwertreihen einer Vielzahl von physikalischen Parametern von Vorteil sind.

Unter einer Abweichungs-Information sind insbesondere akustische und/oder optische Signale, sowie Meldungen an verbundene Empfangsgeräte, eine Email, eine SMS ("Short Message Service"), das Setzen eines Flags oder die Abgabe eines Interruptsignals. Inhaltlich kann die Abweichungs-Information die ermittelte Abweichung selbst aufweisen (also zum Beispiel die Differenz zwischen zwei Messwerten) oder auch die bloße Information, dass eine Abweichung vorliegt. Kann der ermittelten Abweichung ein sich anbahnender oder sogar ein vorliegender Defekt im Lager- und Kommissioniersystem 8 zugeordnet werden, dann kann die Abweichungs-Information auch die Funktion eines Alarms aufweisen.

Vorteilhaft ist es, wenn mit dem Abgeben der Abweichungs-Information eine Eingabeaufforderung an einen Benutzer gerichtet wird und eine technische Information des Benutzers betreffend eine Betriebsfähigkeit des Lager- und Kommissioniersystems 8 an einer Eingabevorrichtung erfasst wird und die technische Information der Abweichung zugeordnet und in der Datenbank gespeichert wird oder die technische Information gemeinsam mit der Abweichung in einen Algorithmus eingespeist wird. Die Eingabevorrichtung kann beispielweise eine mobile Recheneinheit, beispielsweise ein Smartphone, ein tragbarer Computer mit Touchscreen oder eine Tastatur und dergleichen sein. Selbstverständlich ist aber auch die Nutzung von fixen Eingabe-Terminals denkbar. Dadurch kann die Erfahrung des Anlagebetreibers in die Klassifizierung einfließen. Im Laufe der Zeit kann so eine Wissensbasis angelegt werden, welche hilft, zukünftig auftretende Anomalien rasch und korrekt zu einer technischen Information zuordnen zu können. Insbesondere kann gemeinsam mit der Erfassung der technischen Information auch ein der technischen Information zugeordneter Ort oder Bauteil eingegeben werden, z.B. "Lagerdefekt an der Förderrolle Nummer 7".

Einer Abweichung oder mehrere Abweichungen kann/können in einer Datenbank und/oder durch einen Algorithmus eine technische Information betreffend die Betriebsfähigkeit des Lager- und Kommissioniersystems 8 zugeordnet werden (vergleiche auch Fig. 5). Es erfolgt also eine Klassifizierung der genannten Abweichung. Diese technische Information kann als Abweichungs-Information oder gemeinsam mit der Abweichungs-Information über eine Ausgabeeinheit (z.B. mittels optischer und/oder akustischer Ausgabe) ausgegeben werden.

In der Datenbank wird die oben genannte Zuordnung gespeichert und kann ausgelesen werden, wenn diese benötigt wird. Im Gegensatz dazu erfolgt die oben genannte Zuordnung bei Zuhilfenahme eines Algorithmus durch Berechnung. Der Algorithmus kann ein mathematisches Modell des Lager- und Kommissioniersystems 8 oder ein neuronales Netz umfassen oder aus diesem gebildet sein. Die genannte technische Information betreffend eine Betriebsfähigkeit des Lager- und Kommissioniersystems 8 kann beispielsweise einen Hinweis auf im Normalbereich befindliche Messwerte, einen Hinweis auf Abnutzung/Verschleiß, einen Hinweis auf einen sich anbahnenden technischen Defekt oder einen Hinweis auf einen vorliegenden technischen Defekt umfassen oder durch einen solchen gebildet sein. In dieser Ausführungsform umfasst das vorgestellte Verfahren somit die Funktion eines Expertensystems.

Beispielsweise kann
- einer übermäßigen Erwärmung im Bereich eines Wälz- oder Gleitlagers (z.B. im Randbereich einer Förderrolle 2) ein Lagerdefekt als technische Information zugeordnet werden,
- einem Geräusch, das für einen Lagerdefekt charakteristisch ist, ein Lagerdefekt als technische Information zugeordnet werden (beispielsweise kann dazu mit Hilfe einer FourierTransformation ein Frequenzspektrum aus einer Audioaufnahme ermittelt werden),
- einer übermäßigen Erwärmung im Bereich einer elektronischen Schaltung ein elektrischer Defekt als technische Information zugeordnet werden,
- einer übermäßigen Erwärmung im Bereich eines Antriebsmotors ein Motordefekt als technische Information zugeordnet werden,
- einer übermäßigen Vibration eine gelöste oder gelockerte Schraubverbindung als technische Information zugeordnet werden,
- einer (optisch erfassten) Verlagerung eines Schraubenkopfes oder einer Mutter eine gelöste oder gelockerte Schraubverbindung als technische Information zugeordnet werden und/oder
- einer unterdurchschnittlich langsamen Bewegungsgeschwindigkeit übermäßiger Schlupf auf den Fördervorrichtungen (z.B. durch eine verölte Förderrolle 2) als technische Information zugeordnet werden.

In der obigen Aufstellung ist unter einem "Defekt" sowohl ein sich anbahnender als auch ein bereits vorliegender Defekt zu verstehen. Insbesondere sind einem sich anbahnenden Defekt andere Schwellwerte einer festgestellten Messdatenabweichung oder einer festgestellten Anomalie zugeordnet als einem bereits vorliegenden Defekt.

Der Einsatz der mobilen Messwert-Erfassungseinheit 1a, 1a' und 1b erlaubt es weiter, eine festgestellte Anomalie oder einen festgestellten Defekt näher zu charakterisieren. Die Störung oder der Defekt wird bei dieser Ausführungsform nicht notgedrungen durch die mobile Messwert-Erfassungseinheit 1a, 1a' und 1b festgestellt, sondern kann mithilfe einer anderen im Lager- und Kommissioniersystem vorhandenen (insbesondere ortsfest installierten) Sensorik detektiert werden. Zur näheren Charakterisierung einer festgestellten Anomalie oder eines festgestellten Defekts wird die mobile Messwert-Erfassungseinheit 1a, 1a' und 1b an den Ort der Störung oder des Defekts transportiert, und es wird ein Messwert, ein zeitlicher Verlauf eines Messwerts und/oder eine örtliche Verteilung von Messwerten eines physikalischen Parameters am besagten Ort erfasst. Auf diese Weise können zusätzliche Daten, welche die Störung oder den Defekt betreffen, erfasst werden. Beispielsweise können Infrarotaufnahmen, Videoaufnahmen oder Audioaufnahmen von jenem Ort erstellt werden, für den eine Störung oder ein Defekt ermittelt wurde.

Vorteilhaft ist es weiterhin, wenn die technische Information und die Abweichung in einen lernfähigen Algorithmus eingespeist werden und wenn durch den lernfähigen Algorithmus eine Korrelation zwischen der technischen Information und der Abweichung oder mehreren Abweichungen oder eine Wahrscheinlichkeit für die Richtigkeit einer Zuordnung der technischen Information zu der Abweichung oder mehreren Abweichungen für eine Vielzahl von Abweichungen berechnet wird. Im Laufe der Zeit kann so eine Wissensbasis angelegt und verbessert werden, welche hilft, zukünftig auftretende Anomalien rasch und korrekt zu einer technischen Information zuordnen zu können.

Zudem ist es von Vorteil, wenn eine Wahrscheinlichkeit für die Richtigkeit der technischen Information gemeinsam mit dieser technischen Information ausgegeben wird und/oder die technische Information nur dann ausgegeben wird, wenn die Wahrscheinlichkeit für die Richtigkeit der Information einen Schwellwert überschreitet, also wenn diese verlässlich ist. Auf diese Weise wird vermieden, dass der Betreiber des Lager- und Kommissioniersystems 8 durch eine technische Information, die nicht gesichert ist, fehlgeleitet wird und das gemeldete Symptom fehlinterpretiert. Beispielweise kann eine Ausgabe "Lagerdefekt wahrscheinlich" oder "Lagerdefekt mit einer Wahrscheinlichkeit von 75%" erfolgen. Denkbar ist auch, dass die Ausgabe beispielsweise unter einem Wert von 10% Wahrscheinlichkeit unterdrückt wird.

Von Vorteil ist es generell auch, wenn die mobile Messwert-Erfassungseinheit 1a, 1a' und 1b in einen Anzeigemodus schaltbar ist, in dem sie am Ort, an dem eine Anomalie oder eine über der vorgegebenen Schwelle liegende Abweichung festgestellt wurde, von den Fördervorrichtungen des Lager- und Kommissioniersystems 8 angehalten wird und dort ein optisches und/oder akustisches Signal abgibt. Auf diese Weise kann der Ort einer festgestellten Anomalie oder eines festgestellten Defekts auf einfache Weise im Lager- und Kommissioniersystem 8 angezeigt werden.

Weiterhin ist es von Vorteil, wenn die mobile Messwert-Erfassungseinheit 1a, 1a' und 1b oder eine Reparatur-Einheit in einen Reparaturmodus schaltbar ist, in dem sie Ersatzteile und/oder Hilfsmittel, welche zur Behebung eines festgestellten Defekts dienen, mit Hilfe der Fördervorrichtungen des Lager- und Kommissioniersystems 8 zu dem am Ort, an dem der Defekt festgestellt wurde, transportiert. Auf diese Weise wird das Bedien- und Wartungspersonal entlastet, da die für eine Behebung eines festgestellten Defekts benötigten Ersatzteile, Hilfsmittel und Werkzeuge mithilfe der Fördervorrichtungen an den Ort, an dem der Defekt festgestellt wurde, transportiert werden. Die mobile Messwert-Erfassungseinheit 1a, 1a' und 1b kann zu diesem Zweck mit einem Laderaum ausgestattet sein. Die Kombination des Anzeigemodus und des Reparaturmodus ist möglich.

Generell kann die Erfassung von Messdaten im laufendenden Betrieb des Lager- und Kommissioniersystems 8 erfolgen. Das heißt, es werden gleichzeitig Waren 19a..19d (insbesondere unter Zuhilfenahme von Liegewaren-Ladehilfsmitteln 20a..20e und/oder Hängetaschen 21a..21c) und die mobilen Messwert-Erfassungseinheiten 1a, 1a' und 1b durch das Lager- und Kommissioniersystem 8 bewegt. Die Leistungsfähigkeit des Lager- und Kommissioniersystems 8 wird durch die Erfassung der Messdaten also nicht eingeschränkt.

Denkbar ist aber auch, dass die Erfassung von Messdaten in einem Analysemodus des Lager- und Kommissioniersystems 8 erfolgt, in dem die zumindest eine mobile Messwert-Erfassungseinheit 1a, 1a' und 1b alleine im Lager- und Kommissioniersystem 8 bewegt wird. Auf diese Weise können störende Einflüsse bei der Erfassung von Messdaten verringert beziehungsweise minimiert werden. Beispielsweise wird die Erfassung von Audiodaten in nur geringer Weise von Hintergrundgeräuschen beeinflusst. Die genannten Vorteile gelten natürlich auch für die teilweise Stilllegung des Lager- und Kommissioniersystems 8, das heißt wenn sich die mobile Messwert-Erfassungseinheit 1a, 1a' und 1b alleine in einem Teilbereich des Lager- und Kommissioniersystems 8 bewegt.

Vorstellbar ist weiterhin, dass mit Hilfe der für die Messwert-Erfassungseinheit 1, 1a, 1a', 1b ermittelten Positionen eine Karte des Lager- und Kommissioniersystems 8 angefertigt wird und die ermittelten Messwerte (z.B. eine örtliche Verteilung von Messwerten), eine Abweichung des zum ersten Zeitpunkt erfassten Messwerts von dem zum zweiten Zeitpunkt erfassten Messwert (z.B. eine örtliche Verteilung von Abweichungen), eine Abweichungs-Information, eine technische Information, eine Störung und/oder ein Defekt in die Karte eingetragen werden. Auf diese Weise können die angegebenen Daten gut in graphischer Form dargestellt werden.

Von Vorteil ist es dabei, wenn die mit der Messwert-Erfassungseinheit 1, 1a, 1a', 1b ermittelte Karte des Lager- und Kommissioniersystem 8 mit Konstruktionsdaten des Lager- und Kommissioniersystems 8 (z.B. CAD-Daten) abgeglichen wird. Auf diese Weise wird die von der Messwert-Erfassungseinheit 1, 1a, 1a', 1b ermittelte Karte des Lager- und Kommissioniersystems 8 mit Konstruktionsdaten desselben (soweit wie möglich) in Übereinstimmung gebracht. Auf diese Weise können beispielsweise Messfehler bei der Erfassung der Position der mobilen Messwert-Erfassungseinheit 1, 1a, 1a', 1b, welcher der Karte zugrunde gelegt werden, korrigiert werden.

Fig. 4 zeigt ergänzend ein vereinfachtes, funktionales Schaubild des beispielhaften Lager- und Kommissioniersystems 8. Konkret zeigt die Fig. 4 eine beispielhafte mobile Messwert-Erfassungseinheit 1 mit einer autarken Energieversorgung 3, einer zentrale Recheneinheit 4 und mehreren Sensoren 5a, 5b. Die Messwert-Erfassungseinheit 1 kann beispielsweise so wie die in Fig. 1 dargestellte Messwert-Erfassungseinheit 1a, so wie die in Fig. 2 dargestellte Messwert-Erfassungseinheit 1b oder auch anders aufgebaut sein.

In dem Beispiel wird angenommen, dass die zentrale Recheneinheit 4 an die autarke Energieversorgung 3 angeschlossen ist und dass die Sensoren 5a, 5b an die zentrale Recheneinheit 4 angeschlossen sind. Zudem wird angenommen, dass die Sensoren 5a, 5b durch die zentrale Recheneinheit 4 mit Energie versorgt werden, sofern es sich nicht ohnehin um passive Sensoren handelt.

Weiterhin ist die mobile Messwert-Erfassungseinheit 1 steuertechnisch mit dem zentralen Steuersystem 25 des Lager- und Kommissioniersystems 8 verbunden, welches wiederum steuertechnisch mit den Fördervorrichtungen des Lager- und Kommissioniersystems 8, hier beispielhaft mit Förderrollen 2a, 2b, verbunden ist.

Grundsätzlich ist in dieser Konstellation vorstellbar, dass die Planung und Berechnung einer Bewegungsbahn für die mobile Messwert-Erfassungseinheit 1 vom zentralen Steuersystem 25 durchgeführt werden. Denkbar ist weiterhin, dass vom zentralen Steuersystem 25 Befehle an die mobile Messwert-Erfassungseinheit 1 gesendet werden, etwa zum Ein- und Ausschalten der Messdatenerfassung. Denkbar ist auch, dass das zentrale Steuersystem 25 Messdaten von der mobilen Messwert-Erfassungseinheit 1 empfängt.

Die Planung und Berechnung einer Bewegungsbahn kann aber auch von der mobilen Messwert-Erfassungseinheit 1 selbst durchgeführt werden. In diesem Fall schickt die mobile Messwert-Erfassungseinheit 1 Befehle beziehungsweise Anforderungen an das zentrale Steuersystem 25, die Fördervorrichtungen (Förderrollen 2a, 2b) so anzusteuern, dass die mobile Messwert-Erfassungseinheit 1 auf der gewünschten Bewegungsbahn transportiert wird.

Die Bestimmung der Position der mobilen Messwert-Erfassungseinheit 1 kann ebenfalls in der mobilen Messwert-Erfassungseinheit 1 selbst und/oder über das zentrale Steuersystem 25 erfolgen. Beispielsweise kann die Ortung der mobilen Messwert-Erfassungseinheit 1 mit Hilfe des zentralen Steuersystems 25 in derselben Weise erfolgen, wie die Ortung der Waren 19a.. 19d und der Liegewaren-Ladehilfsmittel 20a..20e und der Hängetaschen 21a..21c. Die Ortung der mobilen Messwert-Erfassungseinheit 1 kann aber auch beispielsweise durch Triangulation, Entfernungsmessung oder Laufzeitmessung zu bekannten Bezugspunkten erfolgen, etwa mit Hilfe von Indoor-GPS, Bluetooth oder WLAN.

Fig. 5 zeigt eine Anordnung, die der in der Fig. 4 gezeigten Anordnung sehr ähnlich ist. Im Unterschied dazu ist die mobile Messwert-Erfassungseinheit 1 in diesem Beispiel mit einer Datenbank 26 und mit den beiden optionalen Fernsteuerungen 27a, 27b verbunden. Darüber hinaus ist neben dem Lager- und Kommissioniersystem 8a auch ein weiteres Lager- und Kommissioniersystem 8b an die Datenbank 26 angeschlossen.

In der Datenbank 26 kann zum Beispiel zu einer Messdatenabweichung in der schon beschriebenen Weise eine technische Information betreffend die Betriebsfähigkeit des Lager- und Kommissioniersystems 8 gespeichert sein. In der Datenbank 26 kann auch ein Modell des Lager- und Kommissioniersystems 8a, 8b sowie exekutierbarer Code gespeichert sein. Beispielsweise kann ein Algorithmus ausgeführt werden, zum Beispiel ein neuronales Netz oder Fuzzy Logic, welche einer Messdatenabweichung eine technische Information betreffend die Betriebsfähigkeit des Lager- und Kommissioniersystems 8 zuordnet.

Wie in der Fig. 5 dargestellt, greifen nach einer vorteilhaften Ausführung mobile Messwert-Erfassungseinheiten 1 mehrerer Lager- und Kommissioniersysteme 8a, 8ab auf dieselbe Datenbank 26 und/oder denselben Algorithmus zu. Auf diese Weise kann das Wissen über die in mehreren Lager- und Kommissioniersystemen 8a, 8b auftretenden Anomalien und Defekte an einer Stelle konzentriert und auch ausgetauscht werden. Dadurch kann das Bedienungspersonal des Lager- und Kommissioniersystems 8a von dem im Lager- und Kommissioniersystem 8b gesammelten Wissen profitieren und umgekehrt.

Die Fernsteuerung 27a, 27b, sind ausgebildet:
- zum Empfang eines Messwerts, eines zeitlichen Verlaufs eines Messwerts und/oder einer örtlichen Verteilung von Messwerten eines physikalischen Parameters sowie
- zur Übermittlung von Steuerbefehlen an die mobile Messwert-Erfassungseinheit 1 sowie an die Fördervorrichtungen (hier Förderrollen 2a, 2b) des Lager- und Kommissioniersystems 8, mit denen die mobile Messwert-Erfassungseinheit 1 bewegt wird.

Mit Hilfe der Fernsteuerungen 27a, 27b kann die Steuerung der mobilen Messwert-Erfassungseinheit 1 übernommen werden. Die Fernsteuerungen 27a, 27b sind dazu in diesem Beispiel mit dem übergeordneten zentralen Steuersystem 25 des Lager- und Kommissioniersystems 8 verbunden (z.B. mit einem Materialflussrechner oder einem Warehouse Management System) um eine gezielte Bewegung der Fördervorrichtungen des Lager- und Kommissioniersystems 8 veranlassen zu können.

Beispielsweise kann eine Route oder Bewegungsbahn, auf welcher die mobile Messwert-Erfassungseinheit 1 durch das Lager- und Kommissioniersystem 8a bewegt werden soll, in Echtzeit vorgegeben oder vorprogrammiert werden. Insbesondere ist auch die bloße Vorgabe von Wegpunkten möglich, welche die mobile Messwert-Erfassungseinheit 1 passieren soll. Die konkrete Umsetzung, das heißt die Bestimmung einer Bewegungsbahn beziehungsweise Route, welche diese Wegpunkte enthält, wird dem übergeordneten zentralen Steuersystem 25 des Lager- und Kommissioniersystems 8a überlassen, beziehungsweise von diesem vorgenommen.

Erfolgt eine Steuerung in Echtzeit, so empfangen die mobile Messwert-Erfassungseinheit 1 sowie die Fördervorrichtungen des Lager- und Kommissioniersystems 8 (hier mittelbar über das zentrale Steuersystem 25) Steuerbefehle von der Fernsteuerung 27a, 27b und führen diese aus.

Die Messdaten können dabei in Echtzeit an die Fernsteuerung 27a, 27b übermittelt werden, oder die Messdaten werden zwischengespeichert und zu einem späteren Zeitpunkt an die Fernsteuerung 27a, 27b übermittelt. Anstelle der Fernsteuerung 27a, 27b oder zusätzlich dazu kann auch ein anderes Empfangsgerät für den Empfang der Messdaten vorgesehen sein.

Wie in der Fig. 5 erkennbar ist, kann die Fernsteuerung 27b auch außerhalb des Lager- und Kommissioniersystems 8a angeordnet sein. Grundsätzlich besteht somit die Möglichkeit einer zentralen Überwachungsstelle für eine Vielzahl von Lager- und Kommissioniersystemen 8a, 8b, wenn auch das Lager- und Kommissioniersystem 8b für den Betrieb mit einer externen Fernsteuerung 27b ausgebildet ist. Insbesondere im Zusammenhang mit der Datenbank 26 kann das Wissen über die in mehreren Lager- und Kommissioniersystemen 8a, 8b auftretenden Anomalien und Defekte an einem Ort konzentriert werden, wodurch sich der Wartungsaufwand für eine Vielzahl von Lager- und Kommissioniersystemen 8a, 8b verringert.

Die Fig. 6 zeigt einen beispielhaften Hänge-Transportträger 6a in Schrägansicht. Der Hänge-Transportträger 6a kann entlang der Hängeförderbahnen 7, 7a..7d angetrieben oder in einem ersten Förderabschnitt angetrieben und in einem zweiten Förderabschnitt nicht angetrieben bewegt werden. Der Hänge-Transportträger 6a kann einen Grundkörper 28 und daran drehbar gelagert eine oder mehrere Laufrollen 29 umfassen. Weiterhin kann der Hänge-Transportträger 6a eine Adapteraufnahme 30 umfassen, in die wahlweise ein erster Hängeadapter 31a oder ein zweiter Hängeadapter 31b eingeschoben werden kann. An dem ersten Hängeadapter 31a kann eine Hängeware über einen Kleiderbügel aufgehängt werden. Der zweite Hängeadapter 31b ist für eine Hängetasche 21a..21c vorgesehen, an welchem die Hängetasche 21a..21c über einen Bügel aufgehängt werden kann. Grundsätzlich könnte aber auch an dem zweiten Hängeadapter 31b eine Hängeware aufgehängt werden. Der Hänge-Transportträger 6a ist nicht auf die in der Fig. 6 dargestellte Bauform beschränkt, sondern könnte auch anders ausgebildet sein. Insbesondere kann der Hänge-Transportträger 6a auch einteilig ausgebildet sein.

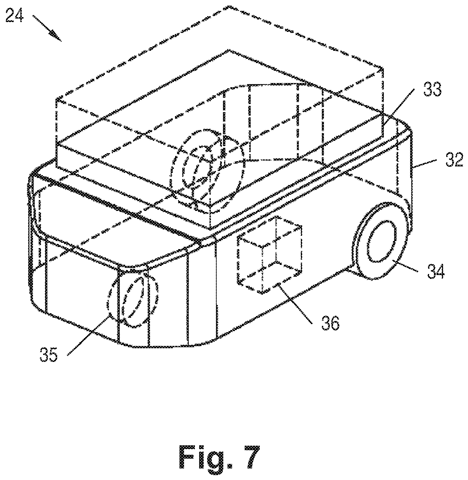

Fig. 7 zeigt schließlich eine mögliche Ausführung eines (selbstfahrenden) autonomen Flurförderfahrzeugs 24 ("AGV" oder "AMR") in Schrägansicht. Das autonome Flurförderfahrzeug 24 umfasst ein Fahrgestell 32 mit einer Antriebseinheit und eine auf dem Fahrgestell 32 angeordnete Ladeplattform 33 zur Aufnahme, Abgabe und zum Transport einer Ware 19a.. 19i, eines Liegewaren-Ladehilfsmittels 20a..20e oder einer mobilen Messwert-Erfassungseinheit 1a, 1a', 1b (in der Fig. 7 nicht dargestellt). Die Oberseite der Ladeplattform 33 bildet in diesem Fall also eine Transportfläche aus, auf welcher ein Liegewaren-Ladehilfsmittel 20a..20e (oder auch eine Hängetasche 21a..21c) oder die mobile Messwert-Erfassungseinheit 1a abgestellt werden kann. Denkbar wäre auch, dass das autonome Flurförderfahrzeug 24 zusätzlich oder alternativ eine Hängestange umfasst, welche eine Transportfläche ausbildet, auf welcher die Hängetaschen 21a..21c oder die mobile Messwert-Erfassungseinheit 1b aufgehängt werden kann. Das autonome Flurförderfahrzeug 24 dient also dem Transport der Ware 19a..19i, des Liegewaren-Ladehilfsmittels 20a..20e, der Hängetaschen 21a..21c oder der mobilen Messwert-Erfassungseinheit 1a, 1a', 1b.

Die Antriebseinheit umfasst an dem Fahrgestell 32 drehbar gelagerte Räder 34, 35, wovon zumindest eines der Räder 34 mit einem (nicht dargestellten) Antrieb gekuppelt ist, und zumindest eines der Räder 35 lenkbar ist. Es können auch beide Räder 34, 35 mit dem Antrieb gekuppelt und durch diesen angetrieben werden. Das autonome Flurförderfahrzeug 24 kann aber auch vier Räder umfassen, wovon zwei Räder lenkbar sind. Nach gezeigter Ausführung ist die Ladeplattform 33 zwischen einer (in festen Linien eingetragenen) Ausgangsstellung und einer (in strichlierte Linien eingetragenen) Transportstellung verstellbar am Fahrgestell 32 gelagert.

In der Ausgangsstellung kann eine Ware 19a.. 19i, ein Liegewaren-Ladehilfsmittel 20a..20e oder eine mobile Messwert-Erfassungseinheit 1a, 1a', 1b unterfahren werden, um diese/dieses aufzunehmen. Wird die Ladeplattform 33 aus der Ausgangsstellung in Richtung der Transportstellung verstellt, kann die Ware 19a.. 19i, das Liegewaren-Ladehilfsmittel 20a..20 oder die mobile Messwert-Erfassungseinheit 1a, 1a', 1b angehoben und danach transportiert werden. Wird die Ladeplattform 33 aus der Transportstellung wieder in Richtung der Ausgangsstellung verstellt, kann die Ware 19a.. 19i, das Liegewaren-Ladehilfsmittel 20a..20 oder die mobile Messwert-Erfassungseinheit 1a, 1a', 1b wieder abgestellt oder abgegeben werden. Selbstverständlich kann eine Ware 19a.. 19i, ein Liegewaren-Ladehilfsmittel 20a..20e oder eine mobile Messwert-Erfassungseinheit 1a, 1a', 1b auch einfach auf der Transportfläche der Ladeplattform 33 abgelegt werden.

Das autonome Flurförderfahrzeug 24 umfasst ferner eine schematisch in strichlierte Linien dargestellte Fahrsteuerung 36 zum Empfang von Befehlen vom zentralen Steuersystem 25 und zum Steuern/Regeln der Bewegungen des autonomen Flurförderfahrzeugs 24. Die Fahrsteuerung 36 kann auch Mittel zur (drahtlosen) Datenübertragung an das und von dem autonomen Flurförderfahrzeug 24 umfassen. Schließlich umfasst das autonome Flurförderfahrzeug 24 nicht dargestellte Sensoren zum Erfassen der Umgebung des autonomen Flurförderfahrzeugs 24 und zur Orientierung im Raum. Der Antrieb der Antriebseinheit und die Sensoren sind mit der Fahrsteuerung 36 verbunden.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1, 1a, 1a', 1b: mobile Messwert-Erfassungseinheit
- 2, 2a, 2b: Förderrolle (Fördervorrichtung)
- 3: autarke Energieversorgung
- 4: zentrale Recheneinheit
- 5a..5c: Sensor

- 6, 6a: Hänge-Transportträger
- 7, 7a..7d: Hängeförderbahn
- 8, 8a, 8b: Lager- und Kommissioniersystem
- 9: erste Beladestation
- 10: Hängetaschen/Hängewaren-Lager

- 11: zweite Beladestation
- 12: Liegewaren-Warenlager
- 13: Kommissionierstation
- 14: Gebäude
- 15: Gebäudeöffnung

- 16: Gebäudeöffnung
- 17a..17c: Roboter
- 18a..18e: Liegeförderbahn
- 19a..19i: Ware
- 20a..20e: Liegewaren-Ladehilfsmittel

- 21a..21c: Hängetasche
- 22: Lagerregal
- 23a, 23b: Regalbediengerät
- 24, 24a..24d: autonomes Flurförderfahrzeug
- 25: zentrales Steuersystem des Lager- und Kommissioniersystems
- 26: Datenbank
- 27a, 27b: Fernsteuerung
- 28: Grundkörper
- 29: Laufrollen
- 30: Adapteraufnahme

- 31a, 31b: Hängeadapter
- 32: Fahrgestell
- 33: Ladeplattform
- 34: Rad (angetrieben)
- 35: Rad (lenkbar)

- 36: Fahrsteuerung
- 37: Ladestation
- A: Transportboden

## Patentansprüche

1. Lager- und Kommissioniersystem (8, 8a, 8b), umfassend
- einen Lagerbereich (10, 12) mit einer Vielzahl an Lagerplätzen, welche eine Lagerfläche zum Lagern von Waren (19a..19i) ausbilden,
- zumindest einen Arbeitsplatz (13) zum Kommissionieren und/oder Umpacken der Waren (19a..19i),
- eine Fördertechnik mit motorisch angetriebenen Fördervorrichtungen (2..2b, 7..7d, 17a..17c, 18a..18e, 23a, 23b, 24..24d), welche eine bewegte Transportfläche aufweisen oder diese bilden und welche zum Transportieren der Waren (19a.. 19i) innerhalb des Lager- und Kommissioniersystems (8, 8a, 8b) auf dieser Transportfläche ausgebildet sind,
- eine mobile Messwert-Erfassungseinheit (1, 1a, 1a', 1b), umfassend eine autarke Energieversorgung (3), eine mit der autarken Energieversorgung (3) verbundene zentrale Recheneinheit (4) und mehrere an die zentrale Recheneinheit (4) angeschlossene Sensoren (5a..5c), wobei die mobile Messwert-Erfassungseinheit (1, 1a, 1a', 1b)
- zum Erfassen eines Messwerts, eines zeitlichen Verlaufs eines Messwerts und/oder einer örtlichen Verteilung von Messwerten eines physikalischen Parameters auf einer Bewegungsbahn der mobilen Messwert-Erfassungseinheit (1, 1a, 1a', 1b) im Lager- und Kommissioniersystem (8, 8a, 8b) mit Hilfe der Sensoren (5a..5c) ausgebildet ist,
- zum Speichern eines Orts im Lager- und Kommissioniersystem (8, 8a, 8b), an dem der Messwert, dessen zeitlicher Verlauf und/oder dessen örtliche Verteilung erfasst wurde, ausgebildet ist und
- für einen Transport auf der Transportfläche der motorisch angetriebenen Fördervorrichtungen (2..2b, 7..7d, 17a..17c, 18a..18e, 23a, 23b, 24..24d) des Lager- und Kommissioniersystems (8, 8a, 8b) entlang der Bewegungsbahn und/oder für einen Zwischenhalt auf der Lagerfläche der Lagerplätze des Lager- und Kommissioniersystems (8, 8a, 8b), welche auf der Bewegungsbahn liegt, ausgebildet ist,
**dadurch gekennzeichnet, dass**
- das Lager- und Kommissioniersystem (8, 8a, 8b) dazu ausgebildet ist, eine Ortung der mobilen Messwert-Erfassungseinheit (1, 1a, 1a', 1b) durch Bestimmung einer Relativposition der mobilen Messwert-Erfassungseinheit (1, 1a, 1a', 1b) ausgehend von einem Bezugsort durchzuführen, wobei
- eine Wegmessung ausgehend vom Bezugsort a) mit Hilfe eines in der mobilen Messwert-Erfassungseinheit (1, 1a, 1a', 1b) eingebauten Wegsensors erfolgt oder b) mit Hilfe eines zentralen Steuersystems (25) des Lager- und Kommissioniersystems (8, 8a, 8b) durch Nutzung von Wegsignalen der bewegten Transportfläche und/oder durch Nutzung von Drehsignalen, die in motorischen Anrieben der Fördervorrichtungen (2..2b, 7..7d, 17a.. 17c, 18a..18e, 23a, 23b, 24..24d) abgenommen werden.

2. Lager- und Kommissioniersystem (8, 8a, 8b) nach Anspruch 1, **dadurch gekennzeichnet, dass** die Fördervorrichtungen ortsfest angeordnete, motorisch angetriebene Fördervorrichtungen (2..2b, 7..7d, 17a..17c, 18a..18e, 23a, 23b,) und/oder mobile, motorisch angetriebene Fördervorrichtungen (24..24d) zum Transport von Waren (19a.. 19i) und der mobilen Messwert-Erfassungseinheit (1, 1a, 1a', 1b) umfassen.

3. Lager- und Kommissioniersystem (8, 8a, 8b) nach Anspruch 1 oder 2, **dadurch gekennzeichnet, dass** die Sensoren (5a..5c) der mobilen Messwert-Erfassungseinheit (1, 1a, 1a', 1b) ein Mikrofon, einen Vibrationssensor oder einen Beschleunigungssensor, einen Temperatursensor, eine Infrarotkamera, eine Kamera für den sichtbaren Wellenlängenbereich, einen Neigungssensor, einen RFID-Transponder, Sensoren für die Triangulation, Entfernungsmessung oder Laufzeitmessung und/oder einen Gassensor umfassen.

4. Lager- und Kommissioniersystem (8, 8a, 8b) nach einem der Ansprüche 1 bis 3, **dadurch gekennzeichnet, dass** ein äußeres Gehäuse der mobilen Messwert-Erfassungseinheit (1, 1a, 1a', 1b) in Form und/oder Größe einem Ladehilfsmittel (20a..20e, 21a..21c) entspricht, das dem Warentransport und der Warenlagerung im Lager- und Kommissioniersystem (8, 8a, 8b) dient.

5. Lager- und Kommissioniersystem (8, 8a, 8b) nach einem der Ansprüche 1 bis 4, **dadurch gekennzeichnet, dass** dieses eine Datenbank (26) und/oder einen Algorithmus aufweist, die oder der zum Ermitteln einer Zuordnung einer technischen Information betreffend eine Betriebsfähigkeit des Lager- und Kommissioniersystems (8, 8a, 8b) zu einer Abweichung des zum ersten Zeitpunkt erfassten Messwerts von dem zum zweiten Zeitpunkt erfassten Messwert, des zum ersten Zeitpunkt erfassten zeitlichen Verlaufs des Messwerts von dem zum zweiten Zeitpunkt erfassten zeitlichen Verlauf des Messwerts und/oder der zum ersten Zeitpunkt erfassten örtlichen Verteilung der Messwerte von der zum zweiten Zeitpunkt erfassten örtlichen Verteilung des Messwerte ausgebildet ist.

6. Lager- und Kommissioniersystem (8, 8a, 8b) nach einem der Ansprüche 1 bis 5, **gekennzeichnet durch** eine rechnerunterstützte Auswerteeinheit, die dazu ausgebildet ist, zumindest einen Messwert, zumindest einen zeitlichen Verlauf zumindest eines Messwerts und/oder zumindest eine örtliche Verteilung von Messwerten eines physikalischen Parameters oder mehrerer physikalischer Parameter einer Analyse zur Detektion einer Anomalie, entsprechend einer Abweichung von einem Normalzustand, zu unterziehen.

7. Verfahren zur Messwerterfassung in einem Lager- und Kommissioniersystem (8, 8a, 8b) mit einem Lagerbereich (10, 12) mit einer Vielzahl an Lagerplätzen, welche eine Lagerfläche zum Lagern von Waren (19a..19i) ausbilden, zumindest einem Arbeitsplatz (13) zum Kommissionieren und/oder Umpacken der Waren (19a..19i), und eine Fördertechnik mit motorisch angetriebenen Fördervorrichtungen (2..2b, 7..7d, 17a..17c, 18a..18e, 23a, 23b, 24..24d), welche eine bewegte Transportfläche aufweisen oder diese bilden und welche zum Transportieren der Waren (19a..19i) innerhalb des Lager- und Kommissioniersystems (8, 8a, 8b) auf dieser Transportfläche ausgebildet sind, umfassend die Schritte
- Bewegen einer mobilen Messwert-Erfassungseinheit (1, 1a, 1a', 1b), welche eine autarke Energieversorgung (3), eine mit der autarken Energieversorgung (3) verbundene zentrale Recheneinheit (4) und mehrere an die zentrale Recheneinheit (4) angeschlossene Sensoren (5a..5c) umfasst, entlang einer Bewegungsbahn im Lager- und Kommissioniersystem (8, 8a, 8b),
- Erfassen eines Messwerts, eines zeitlichen Verlaufs eines Messwerts und/oder einer örtlichen Verteilung von Messwerten eines physikalischen Parameters auf einer Bewegungsbahn mit Hilfe der Sensoren (5a..5c) und Speichern eines Orts im Lager- und Kommissioniersystem (8, 8a, 8b), an dem der Messwert, dessen zeitlicher Verlauf und/oder dessen örtliche Verteilung erfasst wurde, zu einem ersten Zeitpunkt und
- Transportieren der mobilen Messwert-Erfassungseinheit (1, 1a, 1a', 1b) auf der Transportfläche der motorisch angetriebenen Fördervorrichtungen (2..2b, 7..7d, 17a..17c, 18a..18e, 23a, 23b, 24..24d) des Lager- und Kommissioniersystems (8, 8a, 8b) entlang der Bewegungsbahn und/oder Anhalten der mobilen Messwert-Erfassungseinheit (1, 1a, 1a', 1b) auf der Lagerfläche der Lagerplätze des Lager- und Kommissioniersystems (8, 8a, 8b), welche auf der Bewegungsbahn liegt,
**dadurch gekennzeichnet, dass**
- eine Ortung der mobilen Messwert-Erfassungseinheit (1, 1a, 1a', 1b) durch Bestimmung einer Relativposition der mobilen Messwert-Erfassungseinheit (1, 1a, 1a', 1b) ausgehend von einem Bezugsort erfolgt und
- eine Wegmessung ausgehend vom Bezugsort a) mit Hilfe eines in der mobilen Messwert-Erfassungseinheit (1, 1a, 1a', 1b) eingebauten Wegsensors erfolgt oder b) mit Hilfe eines zentralen Steuersystems (25) des Lager- und Kommissioniersystems (8, 8a, 8b) durch Nutzung von Wegsignalen der bewegten Transportfläche und/oder durch Nutzung von Drehsignalen, die in motorischen Anrieben der Fördervorrichtungen (2..2b, 7..7d, 17a.. 17c, 18a..18e, 23a, 23b, 24..24d) abgenommen werden.

8. Verfahren nach Anspruch 7, **dadurch gekennzeichnet, dass** zumindest ein Messwert, zumindest ein zeitlicher Verlauf zumindest eines Messwerts und/oder zumindest eine örtliche Verteilung von Messwerten eines physikalischen Parameters oder mehrerer physikalischer Parameter einer Analyse zur Detektion einer Anomalie, entsprechend einer Abweichung von einem Normalzustand, unterzogen werden.

9. Verfahren nach Anspruch 7 oder 8, **gekennzeichnet durch** die zusätzlichen Schritte
- Erfassen eines Messwerts, eines zeitlichen Verlaufs eines Messwerts und/oder einer örtlichen Verteilung von Messwerten dieses physikalischen Parameters entlang der Bewegungsbahn mit Hilfe der Sensoren (5a..5c) im Wesentlichen am selben Ort zu einem zweiten Zeitpunkt,
- Ermitteln einer Abweichung des zum ersten Zeitpunkt erfassten Messwerts von dem zum zweiten Zeitpunkt erfassten Messwert, des zum ersten Zeitpunkt erfassten zeitlichen Verlaufs des Messwerts von dem zum zweiten Zeitpunkt erfassten zeitlichen Verlauf des Messwerts und/oder der zum ersten Zeitpunkt erfassten örtlichen Verteilung der Messwerte von der zum zweiten Zeitpunkt erfassten örtlichen Verteilung der Messwerts, und Erzeugen und Abgeben einer Abweichungs-Information, wenn die ermittelte Abweichung eine vorgebbare Schwelle überschreitet.

10. Verfahren nach Anspruch 8, **dadurch gekennzeichnet, dass** zumindest ein Messwert, ein zeitlicher Verlauf zumindest eines Messwerts und/oder zumindest eine örtliche Verteilung von Messwerten eines physikalischen Parameters oder mehrerer physikalischer Parameter einer Analyse zur automatischen Detektion einer Anomalie unter Verwendung einer statistischen Signalauswertung oder unter Verwendung eines lernfähigen Algorithmus des Lager- und Kommissioniersystems (8, 8a, 8b) unterzogen werden und eine Abweichungs-Information erzeugt und abgegeben wird, wenn eine Anomalie, entsprechend einer Abweichung von einem Normalzustand, erkannt wurde.

11. Verfahren nach Anspruch 9 oder 10, **dadurch gekennzeichnet, dass** mit dem Abgeben der Abweichungs-Information eine Eingabeaufforderung an einen Benutzer gerichtet wird und eine technische Information des Benutzers betreffend eine Betriebsfähigkeit des Lager- und Kommissioniersystems (8, 8a, 8b) an einer Eingabevorrichtung erfasst wird und die technische Information der Abweichung zugeordnet und in einer Datenbank (26) gespeichert wird oder die technische Information gemeinsam mit der Abweichung in einen Algorithmus eingespeist wird.

12. Verfahren nach einem der Ansprüche 9 bis 11, **dadurch gekennzeichnet, dass** einer Abweichung oder mehreren Abweichungen in einer Datenbank (26) und/oder durch einen Algorithmus eine technische Information betreffend eine Betriebsfähigkeit des Lager- und Kommissioniersystems (8, 8a, 8b) zugeordnet wird und diese technische Information als Abweichungs-Information oder gemeinsam mit der Abweichungs-Information ausgegeben wird.

13. Verfahren nach Anspruch 11 oder 12, **dadurch gekennzeichnet, dass** die technische Information und die Abweichung in einen lernfähigen Algorithmus des Lager- und Kommissioniersystems (8, 8a, 8b) eingespeist werden und dass durch den lernfähigen Algorithmus eine Korrelation zwischen der technischen Information und der Abweichung oder mehreren Abweichungen oder eine Wahrscheinlichkeit für eine Richtigkeit der Zuordnung der technischen Information zu der Abweichung oder mehreren Abweichungen für eine Vielzahl von Abweichungen berechnet wird.

14. Verfahren nach einem der Ansprüche 11 bis 13, **dadurch gekennzeichnet, dass** mobile Messwert-Erfassungseinheiten (1, 1a, 1a', 1b) mehrerer Lager- und Kommissioniersysteme (8, 8a, 8b) dieselbe Datenbank (26) und/oder denselben Algorithmus verwenden.

15. Verfahren nach einem der Ansprüche 8 bis 14, **dadurch gekennzeichnet, dass** die mobile Messwert-Erfassungseinheit (1, 1a, 1a', 1b) in einen Anzeigemodus schaltbar ist, in dem sie am Ort, an dem eine Anomalie oder eine über der vorgegebenen Schwelle liegende Abweichung festgestellt wurde, von den Fördervorrichtungen (2..2b, 7..7d, 17a..17c, 18a..18e, 23a, 23b, 24..24d) des Lager- und Kommissioniersystems (8, 8a, 8b) angehalten wird und dort mit einer Ausgabeeinheit ein optisches und/oder akustisches Signal abgibt.

16. Verfahren nach einem der Ansprüche 7 bis 15, **dadurch gekennzeichnet, dass** ein Messwert, ein zeitlicher Verlauf eines Messwerts und/oder eine örtliche Verteilung von Messwerten eines physikalischen Parameters an eine Fernsteuerung (27a, 27b) übermittelt werden und die mobile Messwert-Erfassungseinheit (1, 1a, 1a', 1b) sowie die Fördervorrichtungen (2..2b, 7..7d, 17a..17c, 18a..18e, 23a, 23b, 24..24d) des Lager- und Kommissioniersystems (8, 8a, 8b), mit denen die mobile Messwert-Erfassungseinheit (1, 1a, 1a', 1b) bewegt wird, Steuerbefehle von dieser Fernsteuerung (27a, 27b) empfangen und ausführen.

17. Verfahren nach einem der Ansprüche 7 bis 16, **dadurch gekennzeichnet, dass** mit Hilfe der für die Messwert-Erfassungseinheit (1, 1a, 1a', 1b) ermittelten Positionen eine Karte des Lager- und Kommissioniersystems (8, 8a, 8b) angefertigt wird und die ermittelten Messwerte, eine Abweichung des zum ersten Zeitpunkt erfassten Messwerts von dem zum zweiten Zeitpunkt erfassten Messwert, eine Abweichungs-Information, eine technische Information, eine Störung und/oder ein Defekt in die Karte eingetragen werden.

18. Verfahren nach Anspruch 17, **dadurch gekennzeichnet, dass** die mit der Messwert-Erfassungseinheit (1, 1a, 1a', 1b) ermittelte Karte des Lager- und Kommissioniersystem (8, 8a, 8b) mit Konstruktionsdaten des Lager- und Kommissioniersystem (8, 8a, 8b) abgeglichen wird.

## Claims

1. A storage and picking system (8, 8a, 8b), comprising
- a storage zone (10, 12) having a plurality of storage locations which form a storage surface for storing articles (19a.. 19i),
- at least one workstation (13) for picking and/or repacking the articles (19a.. 19i),
- a conveying system with motor-driven conveying means (2..2b, 7..7d, 17a.. 17c, 18a..18e, 23a, 23b, 24..24d) which have a moving transport surface, or form same, and which are configured for transporting the articles (19a.. 19i) on this transport surface inside the storage and picking system (8, 8a, 8b),
- a mobile measurement-value acquisition unit (1, 1a, 1a', 1b), comprising an independent power supply (3), a central processing unit (4) connected to the independent power supply (3) and multiple sensors (5a..5c) connected to the central processing unit (4), wherein the mobile measurement-value acquisition unit (1, 1a, 1a', 1b)
- is configured for acquiring a measurement value, a time course of a measurement value and/or a local distribution of measurement values of a physical parameter on a movement path of the mobile measurement-value acquisition unit (1, 1a, 1a', 1b) in the storage and picking system (8, 8a, 8b) with the help of the sensors (5a..5c),
- is configured for storing a location in the storage and picking system (8, 8a, 8b) on which the measurement value, its time course and/or its local distribution was acquired and
- is configured for a transport on the transport surface of the motor-driven conveying means (2..2b, 7..7d, 17a..17c, 18a..18e, 23a, 23b, 24..24d) of the storage and picking system (8, 8a, 8b) along the movement path and/or for an intermediate stop on the storage surface of the storage locations of the storage and picking system (8, 8a, 8b) which is situated on the movement path
**characterized in that**
- the storage and picking system (8, 8a, 8b) is configured for carrying out a locating of the mobile measurement-value acquisition unit (1, 1a, 1a', 1b) by determining a relative position of the mobile measurement-value acquisition unit (1, 1a, 1a', 1b) on the basis of a reference location, wherein
- a displacement measurement on the basis of the reference location is done a) with the help of a displacement sensor built into the mobile measurement-value acquisition unit (1, 1a, 1a', 1b) or b) with the help of a central control system (25) of the storage and picking system (8, 8a, 8b) by using displacement signals of the moving transport surface and/or by using rotation signals which are read out in motor drives of the conveying means (2..2b, 7..7d, 17a..17c, 18a..18e, 23a, 23b, 24..24d).

2. The storage and picking system (8, 8a, 8b) according to claim 1, **characterized in that** the conveying means comprise stationary, motor-driven conveying means (2..2b, 7..7d, 17a..17c, 18a..18e, 23a, 23b,) and/or mobile, motor-driven conveying means (24..24d) for transporting articles (19a..19i) and the mobile measurement-value acquisition unit (1, 1a, 1a', 1b).

3. The storage and picking system (8, 8a, 8b) according to claim 1 or 2, **characterized in that** the sensors (5a..5c) of the mobile measurement-value acquisition unit (1, 1a, 1a', 1b) comprise a microphone, a vibration sensor or an acceleration sensor, a temperature sensor, an infrared camera, a camera for the visible wavelength range, a tilt sensor, an RFID transponder, sensors for the triangulation, distance measurement or travel-time measurement and/or a gas sensor.

4. The storage and picking system (8, 8a, 8b) according to one of claims 1 to 3, **characterized in that** an exterior housing of the mobile measurement-value acquisition unit (1, 1a, 1a', 1b) is identical, in form and/or size, with a loading aid (20a..20e , 21a..21c) which serves for the transport of articles and the storage of articles in the storage and picking system (8, 8a, 8b).

5. The storage and picking system (8, 8a, 8b) according to one of claims 1 to 4, **characterized in that** same has a database (26) and/or an algorithm which is configured for ascertaining an assignment of a piece of technical information relating to an operating ability of the storage and picking system (8, 8a, 8b) to a deviation of the measurement value acquired at the first point in time from the measurement value acquired at the second point in time, of the time course of the measurement value acquired at the first point in time from the time course of the measurement value acquired at the second point in time and/or of the local distribution of the measurement values acquired at the first point in time from the local distribution of the measurement values acquired at the second point in time.

6. The storage and picking system (8, 8a, 8b) according to one of claims 1 to 5, **characterized by** a computer-aided evaluation unit which is configured to subject at least one measurement value, at least one time course of at least one measurement value and/or at least one local distribution of measurement values of a physical parameter, or of multiple physical parameters, to an analysis for detecting an anomaly, in terms of a deviation from a normal state.

7. A method for acquiring measurement values in a storage and picking system (8, 8a, 8b) having a storage zone (10, 12) with a plurality of storage locations which form a storage surface for storing articles (19a.. 19i), at least one workstation (13) for picking and/or repacking the articles (19a..19i), and a conveying system with motor-driven conveying means (2..2b, 7..7d, 17a..17c, 18a..18e, 23a, 23b, 24..24d) which have a moving transport surface, or form same, and which are configured for transporting the articles (19a.. 19i) on this transport surface inside the storage and picking system (8, 8a, 8b), comprising the steps
- moving a mobile measurement-value acquisition unit (1, 1a, 1a', 1b) which comprises an independent power supply (3), a central processing unit (4) connected to the independent power supply (3) and multiple sensors (5a..5c) connected to the central processing unit (4) along a movement path in the storage and picking system (8, 8a, 8b),
- acquiring a measurement value, a time course of a measurement value and/or a local distribution of measurement values of a physical parameter on a movement path with the help of the sensors (5a..5c) and storing a location in the storage and picking system (8, 8a, 8b) on which the measurement value, its time course and/or its local distribution was acquired, at a first point in time and
- transporting the mobile measurement-value acquisition unit (1, 1a, 1a', 1b) on the transport surface of the motor-driven conveying means (2..2b, 7..7d, 17a..17c, 18a..18e, 23a, 23b, 24..24d) of the storage and picking system (8, 8a, 8b) along the movement path and/or stopping the mobile measurement-value acquisition unit (1, 1a, 1a', 1b) on the storage surface of the storage locations of the storage and picking system (8, 8a, 8b) which is situated on the movement path,
**characterized in that**
- a locating of the mobile measurement-value acquisition unit (1, 1a, 1a', 1b) is done by determining a relative position of the mobile measurement-value acquisition unit (1, 1a, 1a', 1b) on the basis of a reference location and
- a displacement measurement on the basis of the reference location is done a) with the help of a displacement sensor built into the mobile measurement-value acquisition unit (1, 1a, 1a', 1b) or b) with the help of a central control system (25) of the storage and picking system (8, 8a, 8b) by using displacement signals of the moving transport surface and/or by using rotation signals which are read out in motor drives of the conveying means (2..2b, 7..7d, 17a..17c, 18a..18e, 23a, 23b, 24..24d).

8. The method according to claim 7, **characterized in that** at least one measurement value, at least one time course of at least one measurement value and/or at least one local distribution of measurement values of a physical parameter, or of multiple physical parameters, are subjected to an analysis for detecting an anomaly, in terms of a deviation from a normal state.

9. The method according to claim 7 or 8, **characterized by** the additional steps
- acquiring a measurement value, a time course of a measurement value and/or a local distribution of measurement values of this physical parameter along the movement path with the help of the sensors (5a..5c) on essentially the same location at a second point in time,
- ascertaining a deviation of the measurement value acquired at the first point in time from the measurement value acquired at the second point in time, of the time course of the measurement value acquired at the first point in time from the time course of the measurement value acquired at the second point in time and/or of the local distribution of the measurement values acquired at the first point in time from the local distribution of the measurement values acquired at the second point in time, and generating and issuing a deviation notice if the ascertained deviation exceeds a specifiable threshold.

10. The method according to claim 8, **characterized in that** at least one measurement value, a time course of at least one measurement value and/or at least one local distribution of measurement values of a physical parameter, or of multiple physical parameters, are subjected to an analysis for automatic detection of an anomaly using a statistical signal evaluation, or using a learning algorithm of the storage and picking system (8, 8a, 8b), and a deviation notice is generated and issued if an anomaly, in terms of a deviation from a normal state, has been identified.

11. The method according to claim 9 or 10, **characterized in that** an input prompt is addressed to a user when the deviation notice is issued and a piece of technical information of the user relating to an operating ability of the storage and picking system (8, 8a, 8b) is acquired at an input device and the piece of technical information is assigned to the deviation and stored in a database (26), or the piece of technical information is fed into an algorithm together with the deviation.

12. The method according to one of claims 9 to 11, **characterized in that** a piece of technical information relating to an operating ability of the storage and picking system (8, 8a, 8b) is assigned to a deviation, or multiple deviations, in a database (26) and/or by means of an algorithm and this technical information is issued as a deviation notice, or together with the deviation notice.

13. The method according to claim 11 or 12, **characterized in that** the piece of technical information and the deviation are fed into a learning algorithm of the storage and picking system (8, 8a, 8b) and that the learning algorithm computes a correlation between the piece of technical information and the deviation, or multiple deviations, or a probability of a correctness of the assignment of the piece of technical information to the deviation, or multiple deviations, for a plurality of deviations.

14. The method according to one of claims 11 to 13, **characterized in that** mobile measurement-value acquisition units (1, 1a, 1a', 1b) of multiple storage and picking systems (8, 8a, 8b) use the same database (26) and/or the same algorithm.

15. The method according to one of claims 8 to 14, **characterized in that** the mobile measurement-value acquisition unit (1, 1a, 1a', 1b) can be switched to a display mode in which it is stopped by the conveying means (2..2b, 7..7d, 17a..17c, 18a..18e, 23a, 23b, 24..24d) of the storage and picking system (8, 8a, 8b) on the location on which an anomaly, or a deviation above the specified threshold, has been detected, and issues an optical and/or acoustic signal there via an output unit.

16. The method according to one of claims 7 to 15, **characterized in that** a measurement value, a time course of a measurement value and/or a local distribution of measurement values of a physical parameter are transmitted to a remote control (27a, 27b), and the mobile measurement-value acquisition unit (1, 1a, 1a', 1b), as well as the conveying means (2..2b, 7..7d, 17a..17c, 18a..18e, 23a, 23b, 24..24d) of the storage and picking system (8, 8a, 8b) with which the mobile measurement-value acquisition unit (1, 1a, 1a', 1b) is moved, receive and execute control commands from this remote control (27a, 27b).

17. The method according to one of claims 7 to 16, **characterized in that** a map of the storage and picking system (8, 8a, 8b) is made with the help of the positions ascertained for the measurement-value acquisition unit (1, 1a, 1a', 1b), and the ascertained measurement values, a deviation of the measurement value acquired at the first point in time from the measurement value acquired at the second point in time, a deviation notice, a piece of technical information, a disruption and/or a defect are marked on the map.

18. The method according to claim 17, **characterized in that** the map of the storage and picking system (8, 8a, 8b) ascertained with the measurement-value acquisition unit (1, 1a, 1a', 1b) is matched against design data of the storage and picking system (8, 8a, 8b).

## Revendications

1. Système de stockage et de préparation de commandes (8, 8a, 8b) comprenant :
- une zone de stockage (10, 12) avec une pluralité d'emplacements de stockage, qui forment une surface de stockage pour le stockage d'articles (19a... 19i),
- au moins un poste de travail (13) pour la préparation de commandes et/ou le reconditionnement des articles (19a... 19i),
- un système de convoyage avec des dispositifs de convoyage motorisés (2... 2b, 7... 7d, 17a... 17c, 18a... 18e, 23a, 23b, 24... 24d), qui comprennent une surface de transport mobile ou qui constituent celle-ci et qui sont conçus pour le transport des articles (19a... 19i) à l'intérieur du système de stockage et de préparation de commandes (8, 8a, 8b) sur cette surface de transport,
- une unité de relevé de valeurs de mesure mobile (1, 1a, 1a', 1b) comprenant une alimentation en énergie autonome (3), une unité de calcul centrale (4) reliée avec l'alimentation en énergie autonome (3) et plusieurs capteurs (5a... 5c) raccordés à l'unité de calcul centrale (4), dans lequel l'unité de relevé de valeurs de mesure mobile (1, 1a, 1a', 1b)
- est conçue pour le relevé d'une valeur de mesure, d'une évolution dans le temps d'une valeur de mesure et/ou d'une répartition locale de valeurs de mesure d'un paramètre physique sur une trajectoire de déplacement de l'unité de relevé de valeurs de mesure mobile (1, 1a, 1a', 1b) dans le système de stockage et de préparation de commandes (8, 8a, 8b) à l'aide des capteurs (5a... 5c),
- est conçue pour l'enregistrement d'un lieu dans le système de stockage et de préparation de commandes (8, 8a, 8b), où la valeur de mesure, son évolution dans le temps et/ou sa répartition locale a été relevée et
- est conçue pour un transport sur la surface de transport des dispositifs de convoyage motorisés (2... 2b, 7... 7d, 17a... 17c, 18a... 18e, 23a, 23b, 24... 24d) du système de stockage et de préparation de commandes (8, 8a, 8b) le long de la trajectoire de déplacement et/ou pour une halte intermédiaire sur la surface de stockage des emplacements de stockage du système de stockage et de préparation de commandes (8, 8a, 8b) qui se trouve sur la trajectoire de déplacement,
**caractérisé en ce que**
- le système de stockage et de préparation de commandes (8, 8a, 8b) est conçu pour effectuer une localisation de l'unité de relevé de valeurs de mesure mobile (1, 1a, 1a', 1b) en déterminant une position relative de l'unité de relevé de valeurs de mesure mobile (1, 1a, 1a', 1b) à partir d'un lieu de référence,
- une mesure de trajectoire à partir du lieu de référence a) à l'aide d'un capteur de déplacement intégré dans l'unité de relevé de valeurs de mesure mobile (1, 1a, 1a', 1b) ou b) à l'aide d'un système de commande central (25) du système de stockage et de préparation de commandes (8, 8a, 8b) en utilisant des signaux de déplacement de la surface de transport mobile et/ou en utilisant des signaux de rotation, qui sont prélevés dans les entraînements motorisés des dispositifs de convoyage (2... 2b, 7... 7d, 17a... 17c, 18a... 18e, 23a, 23b, 24... 24d).

2. Système de stockage et de préparation de commandes (8, 8a, 8b) selon la revendication 1, **caractérisé en ce que** les dispositifs de convoyage comprennent des dispositifs de convoyage motorisés (2... 2b, 7... 7d, 17a... 17c, 18a... 18e, 23a, 23b) fixes et/ou des dispositifs de convoyage motorisés (24... 24d) mobiles pour le transport d'articles (19a... 19i) et de l'unité de relevé de valeurs de mesure mobile (1, 1a, 1a', 1b).

3. Système de stockage et de préparation de commandes (8, 8a, 8b) selon la revendication 1 ou 2, **caractérisé en ce que** les capteurs (5a... 5c) de l'unité de relevé de valeurs de mesure mobile (1, 1a, 1a', 1b) comprennent un microphone, un capteur de vibrations ou un capteur d'accélération, un capteur de température, une caméra infrarouge, une caméra pour le domaine des longueurs d'ondes visibles, un capteur d'inclinaison, un transpondeur RFID, des capteurs pour la triangulation, la mesure de distance ou la mesure de durée et/ou capteur de gaz.

4. Système de stockage et de préparation de commandes (8, 8a, 8b) selon l'une des revendications 1 à 3, **caractérisé en ce qu'**un boîtier externe de l'unité de relevé de valeurs de mesure mobile (1, 1a, 1a', 1b) correspond, en ce qui concerne sa forme et/ou sa taille, à un moyen de chargement (20a... 20e, 21a... 21c), qui permet le transport d'articles et le stockage d'articles dans le système de stockage et de préparation de commandes (8, 8a, 8b).

5. Système de stockage et de préparation de commandes (8, 8a, 8b) selon l'une des revendications 1 à 4, **caractérisé en ce que** celui-ci comprend une base de données (26) et/ou un algorithme, qui est conçu pour la détermination d'une correspondance d'une information technique concernant une capacité de fonctionnement du système de stockage et de préparation de commandes (8, 8a, 8b) avec un écart entre la valeur de mesure relevée au premier instant et la valeur de mesure relevée au deuxième instant, entre l'évolution dans le temps de la valeur de mesure relevée au premier instant et l'évolution dans le temps de la valeur de mesure relevée au deuxième instant et/ou entre la répartition locale des valeurs de mesure relevées au premier instant et la répartition locale des valeurs de mesure relevées au deuxième instant.

6. Système de stockage et de préparation de commandes (8, 8a, 8b) selon l'une des revendications 1 à 5, **caractérisé par** une unité d'analyse assistée par ordinateur, qui est conçue pour soumettre au moins une valeur de mesure, au moins une évolution dans le temps d'une valeur de mesure et/ou au moins une répartition locale de valeurs de mesure d'un paramètre physique ou de plusieurs paramètres physiques à une analyse pour la détection d'une anomalie, en fonction d'un écart par rapport à un état normal.

7. Procédé de relevé de valeurs de mesure dans un système de stockage et de préparation de commandes (8, 8a, 8b) avec une zone de stockage (10, 12) avec une pluralité d'emplacements de stockage, qui forment une surface de stockage pour le stockage d'articles (19a... 19i), au moins un poste de travail (13) pour la préparation de commandes et/ou le reconditionnement des articles (19a... 19i) et un système de convoyage avec des dispositifs de convoyage motorisés (2... 2b, 7... 7d, 17a... 17c, 18a... 18e, 23a, 23b, 24... 24d), qui comprennent une surface de transport mobile ou qui constituent celle-ci et qui sont conçus pour le transport des articles (19a... 19i) à l'intérieur du système de stockage et de préparation de commandes (8, 8a, 8b) sur cette surface de transport, comprenant les étapes suivantes :
- déplacement d'une unité de relevé de valeurs de mesure mobile (1, 1a, 1a', 1b), qui comprend une alimentation en énergie autonome (3), une unité de calcul centrale (4) reliée avec l'alimentation en énergie autonome (3) et plusieurs capteurs (5a... 5c) raccordés à l'unité de calcul centrale (4), le long d'une trajectoire de déplacement dans le système de stockage et de préparation de commandes (8, 8a, 8b),
- relevé d'une valeur de mesure, d'une évolution dans le temps d'une valeur de mesure et/ou d'une répartition locale de valeurs de mesure d'un paramètre physique sur une trajectoire de déplacement dans le système de stockage et de préparation de commandes (8, 8a, 8b) à l'aide des capteurs (5a... 5c) et enregistrement d'un lieu dans le système de stockage et de préparation de commandes (8, 8a, 8b), où la valeur de mesure, son évolution dans le temps et/ou sa répartition locale a été relevée et
- transport de l'unité de relevé de valeurs de mesure mobile (1, 1a, 1a', 1b) sur la surface de transport des dispositifs de convoyage motorisés (2... 2b, 7... 7d, 17a... 17c, 18a... 18e, 23a, 23b, 24... 24d) du système de stockage et de préparation de commandes (8, 8a, 8b) le long de la trajectoire de déplacement et/ou arrêt sur la surface de stockage des emplacements de stockage du système de stockage et de préparation de commandes (8, 8a, 8b) qui se trouve sur la trajectoire de déplacement,
**caractérisé en ce que**
- une localisation de l'unité de relevé de valeurs de mesure mobile (1, 1a, 1a', 1b) est effectuée en déterminant une position relative de l'unité de relevé de valeurs de mesure mobile (1, 1a, 1a', 1b) à partir d'un lieu de référence,
- une mesure de trajectoire est effectuée à partir du lieu de référence a) à l'aide d'un capteur de déplacement intégré dans l'unité de relevé de valeurs de mesure mobile (1, 1a, 1a', 1b) ou b) à l'aide d'un système de commande central (25) du système de stockage et de préparation de commandes (8, 8a, 8b) en utilisant des signaux de déplacement de la surface de transport mobile et/ou en utilisant des signaux de rotation, qui sont prélevés dans les entraînements motorisés des dispositifs de convoyage (2... 2b, 7... 7d, 17a... 17c, 18a... 18e, 23a, 23b, 24... 24d).

8. Procédé selon la revendication 7, **caractérisé en ce qu'**au moins une valeur de mesure, au moins une évolution dans le temps d'une valeur de mesure et/ou au moins une répartition locale de valeurs de mesure d'un paramètre physique ou de plusieurs paramètres physiques sont soumises à une analyse pour la détection d'une anomalie, en fonction d'un écart par rapport à un état normal.

9. Procédé selon la revendication 7 ou 8, **caractérisé par** les étapes supplémentaires suivantes :
- relevé d'une valeur de mesure, d'une évolution dans le temps d'une valeur de mesure et/ou d'une répartition locale de valeurs de mesure d'un paramètre physique le long de la trajectoire de déplacement à l'aide des capteurs (5a... 5c) globalement au même endroit à un deuxième instant,
- détermination d'un écart entre la valeur de mesure relevée au premier instant et la valeur de mesure relevée au deuxième instant, entre l'évolution dans le temps de la valeur de mesure relevée au premier instant et l'évolution dans le temps de la valeur de mesure relevée au deuxième instant et/ou entre la répartition locale des valeurs de mesure relevées au premier instant et la répartition locale des valeurs de mesure relevées au deuxième instant et génération et émission d'une information d'écart, lorsque l'écart déterminé dépasse un seuil prédéterminé.

10. Procédé selon la revendication 8, **caractérisé en ce qu'**au moins une valeur de mesure, au moins une évolution dans le temps d'une valeur de mesure et/ou au moins une répartition locale de valeurs de mesure d'un paramètre physique ou de plusieurs paramètres physiques sont soumises à une analyse pour la détection automatique d'une anomalie en utilisant une analyse statistique des signaux ou en utilisant un algorithme capable d'apprendre du système de stockage et de préparation de commandes (8, 8a, 8b) ou une information d'écart est générée et émise lorsqu'une anomalie a été détectée en fonction d'un écart par rapport à un état normal.

11. Procédé selon la revendication 9 ou 10, **caractérisé en ce que**, avec l'émission de l'information d'écart, une requête d'entrée est adressée à un utilisateur et une information technique de l'utilisateur concernant une capacité de fonctionnement du système de stockage et de préparation de commandes (8, 8a, 8b) est saisie sur un dispositif d'entrée et l'information technique est attribuée à l'écart et est enregistrée dans une base de données (26) ou l'information technique est introduite, conjointement avec l'écart, dans un algorithme.

12. Procédé selon l'une des revendications 9 à 11, **caractérisé en ce que**, à un écart ou à plusieurs écarts, dans une base de données (26) et/ou à l'aide d'un algorithme, une information technique concernant une capacité de fonctionnement du système de stockage et de préparation de commandes (8, 8a, 8b) est attribuée et cette information technique est émise en tant qu'information d'écart ou émise conjointement avec l'information d'écart.

13. Procédé selon la revendication 11 ou 12, **caractérisé en ce que** l'information technique et l'écart sont introduits dans un algorithme capable d'apprendre du système de stockage et de préparation de commandes (8, 8a, 8b) et **en ce que**, à l'aide de l'algorithme capable d'apprendre, une corrélation entre l'information technique et l'écart ou les plusieurs écarts ou une probabilité d'une exactitude de l'attribution de l'information technique à l'écart ou des plusieurs écarts, est calculée pour une pluralité d'écarts.

14. Procédé selon l'une des revendications 11 à 13, **caractérisé en ce que** les unités de relevé de valeurs de mesure mobiles (1, 1a, 1', 1b) de plusieurs systèmes de stockage et de préparation de commandes (8, 8a, 8b) utilisent la même base de données (26) et/ou le même algorithme.

15. Procédé selon l'une des revendications 8 à 14, **caractérisé en ce que** l'unité de relevé de valeurs de mesure mobile (1, 1a, 1a', 1b) peut être mise dans un mode d'affichage dans lequel, à l'endroit où une anomalie ou un écart se trouvant au-dessus du seuil prédéterminé a été constaté, elle est arrêtée par les dispositifs de convoyage (2... 2b, 7... 7d, 17a... 17c, 18a... 18e, 23a, 23b, 24... 24d) du système de stockage et de préparation de commandes (8, 8a, 8b) et elle y émet, avec une unité de sortie, un signal optique et/ou acoustique.

16. Procédé selon l'une des revendications 7 à 15, **caractérisé en ce qu'**une valeur de mesure, une évolution dans le temps d'une valeur de mesure et/ou une répartition locale de valeurs de mesure d'un paramètre physique sont transmises une commande à distance (27a, 27b) et l'unité de relevé de valeurs de mesure mobile (1, 1a, 1a', 1b) ainsi que les dispositifs de convoyage (2... 2b, 7... 7d, 17a... 17c, 18a... 18e, 23a, 23b, 24... 24d) du système de stockage et de préparation de commandes (8, 8a, 8b), avec lesquels l'unité de relevé de valeurs de mesure mobile (1, 1a, 1a', 1b) est déplacée, reçoivent et exécutent les instructions de commande provenant de cette commande à distance (27a, 27b).

17. Procédé selon l'une des revendications 7 à 16, **caractérisé en ce que**, à l'aide des positions déterminées pour l'unité de relevé de valeurs de mesure mobile (1, 1a, 1a', 1b), une carte du système de stockage et de préparation de commandes (8, 8a, 8b) est établie et les valeurs de mesure déterminées, un écart entre la valeur de mesure relevée au premier instant et la valeur de mesure relevée au deuxième instant, une information d'écart, une information technique, une panne et/ou un défaut sont inscrits sur la carte.

18. Procédé selon la revendication 17, **caractérisé en ce que** la carte du système de stockage et de préparation de commandes (8, 8a, 8b) déterminé avec l'unité de relevé de valeurs de mesure mobile (1, 1a, 1a', 1b) est comparée avec les données de construction du système de stockage et de préparation de commandes (8, 8a, 8b).
